# EUROPEAN PATENT APPLICATION

(11) **EP 4 807 970 A1**
(43) Date of publication of application: **16.09.2026**
(21) Application number: 23958205.9
(22) Date of filing: 06.11.2023
(51) Int. Cl.: H02M 7/48, H02M 7/12

(54) **POWER CONVERSION DEVICE**

(71) Applicant: Mitsubishi Electric Corporation, Tokyo 100-8310 (JP)
(72) Inventor: IDO, Yasunori, Tokyo 100-8310 (JP)
(74) Representative: Witte, Weller & Partner Patentanwälte mbB
(86) International application number: PCT/JP2023/039889
(87) International publication number: WO 2025/099799

(57) **Abstract**

A power conversion device (1) includes: an MMC-type power converter (2) including a plurality of unit converters (7); and a controller group (3) that controls the power converter (2). Each of the plurality of unit converters (7) corresponds to any one of a plurality of controllers (30) constituting the controller group (3) and is connected to a corresponding controller (30). At least two controllers (30) of the controller group (3) are connected to a higher-level device (20) through a first network (43), the first network (43) being a ring-shaped daisy chain. Each controller (30) of the controller group (3) is connected to at least one of the controllers (30) in the controller group (3) through at least one second network (46), the second network (46) being a line-shaped daisy chain.

## Description

### TECHNICAL FIELD

The present disclosure relates to a power conversion device.

### BACKGROUND ART

In self-commutated HVDC (High Voltage Direct Current) or the like, a so-called MMC (Modular Multilevel Converter)-type power conversion device including multiple cascaded unit converters is used.

In the MMC-type power conversion device, it is necessary to share latest control information between a central controller and a plurality of individual control units individually corresponding to the unit converters. Therefore, the central controller and each individual control unit are connected to each other by an optical fiber cable. As an example, Japanese Patent Laying-Open No. 2015-186067 (PTL 1) describes an example in which a central controller and each individual control unit are daisy-chain-connected to each other.

### CITATION LIST

### PATENT LITERATURE

PTL 1: Japanese Patent Laying-Open No. 2015-186067

### SUMMARY OF INVENTION

### TECHNICAL PROBLEM

In the MMC-type power conversion device, it is necessary to control multiple individual control units at high speed. Particularly in the case of the self-commutated HVDC, it is necessary to make a control cycle shorter (e.g., 100 microseconds or shorter) than that in the case of control of an AC power system, in order to stably control a DC power system. When the central controller is configured using an inexpensive CPU (Central Processing Unit), processing in a short cycle is difficult when an amount of control processing is large.

In order to deal with the above-described problem, the inventor of the present application considers dividing processing into a plurality of controllers and operating these controllers in coordination with each other. This causes a reduction in burden of an amount of processing by each controller, which makes it possible to perform processing in a short cycle. However, when control processing is distributed over a plurality of controllers, it is necessary to complete, within one control cycle, exchanging data required for processing among the controllers and performing a control computation assigned to each controller. How to specifically achieve a configuration of such a control system has not been clarified so far.

The present disclosure is based on a result of the above-described consideration by the inventor of the present application and an object thereof is to enable control of a power converter in a short cycle by operating a plurality of controllers in coordination with each other in an MMC-type power conversion device.

### SOLUTION TO PROBLEM

A power conversion device according to an embodiment includes: a power converter including a plurality of leg circuits connected in parallel with each other; and a controller group that controls the power converter. Each of the plurality of leg circuits includes a plurality of cascaded unit converters. Each of the plurality of unit converters includes a power storage element and a plurality of switching elements, and is configured to output a voltage of the power storage element in accordance with open/closed states of the plurality of switching elements. Each of the plurality of unit converters corresponds to any one of a plurality of controllers constituting the controller group and is connected to a corresponding controller. At least two controllers of the controller group are connected to a higher-level device through a first network, the first network being a ring-shaped daisy chain. Each controller constituting the controller group is connected to at least one of the controllers in the controller group through at least one second network, the second network being a line-shaped daisy chain.

### ADVANTAGEOUS EFFECTS OF INVENTION

According to the above-described power conversion device, the plurality of controllers constituting the controller group can exchange data required for processing among the controllers through the first network and the second network, thereby controlling the power converter in a short cycle in coordination with each other.

### BRIEF DESCRIPTION OF DRAWINGS

Fig. 1 is a schematic configuration diagram of a power conversion device according to a first embodiment.
Fig. 2 is a circuit diagram showing an example of a unit converter constituting each leg circuit in Fig. 1.
Fig. 3 is a diagram for illustrating a configuration of a plurality of communication ports of each of controllers constituting a controller group in Fig. 1.
Fig. 4 is a diagram for illustrating the manner of communication connection between a higher-level device and the controller group.
Fig. 5 is a block diagram showing a hardware configuration example of a controller.
Fig. 6 is a timing chart for illustrating a processing flow of each of the higher-level device and controllers #1 to #3 in Fig. 4.
Fig. 7 shows an example of processing assigned to a slot of each computing device.
Fig. 8 is a diagram for illustrating an inter-controller communication flow performed using a communication frame having a fixed length.
Fig. 9 is a diagram for illustrating an inter-controller communication flow performed using a communication frame having a variable length.
Fig. 10 is a diagram for illustrating a higher-level device communication flow performed using a communication frame having a fixed length.
Fig. 11 is a diagram for illustrating a higher-level device communication flow performed using a communication frame having a variable length.
Fig. 12 is a diagram for illustrating the manner of communication connection between the higher-level device and a subgroup and among a plurality of controllers in each subgroup.
Fig. 13 is a timing chart for illustrating a processing flow of each of the higher-level device and controllers #1 to #6 in Fig. 12.
Fig. 14 is a diagram for illustrating an inter-controller communication flow performed using a communication frame having a fixed length in a power conversion device according to a second embodiment.
Fig. 15 is a diagram for illustrating an inter-controller communication flow performed using a communication frame having a variable length in the power conversion device according to the second embodiment.
Fig. 16 is a diagram for illustrating a higher-level device communication flow performed using a communication frame having a fixed length in the power conversion device according to the second embodiment.
Fig. 17 is a diagram for illustrating a higher-level device communication flow performed using a communication frame having a variable length in the power conversion device according to the second embodiment.
Fig. 18 shows an example of processing assigned to a slot of each computing device in the power conversion device according to the second embodiment.

### DESCRIPTION OF EMBODIMENTS

Embodiments will be hereinafter described in detail with reference to the drawings. The same or corresponding parts are designated by the same reference characters and description thereof will not be repeated.

### First Embodiment.

### [Schematic Overall Configuration of Power Conversion Device]

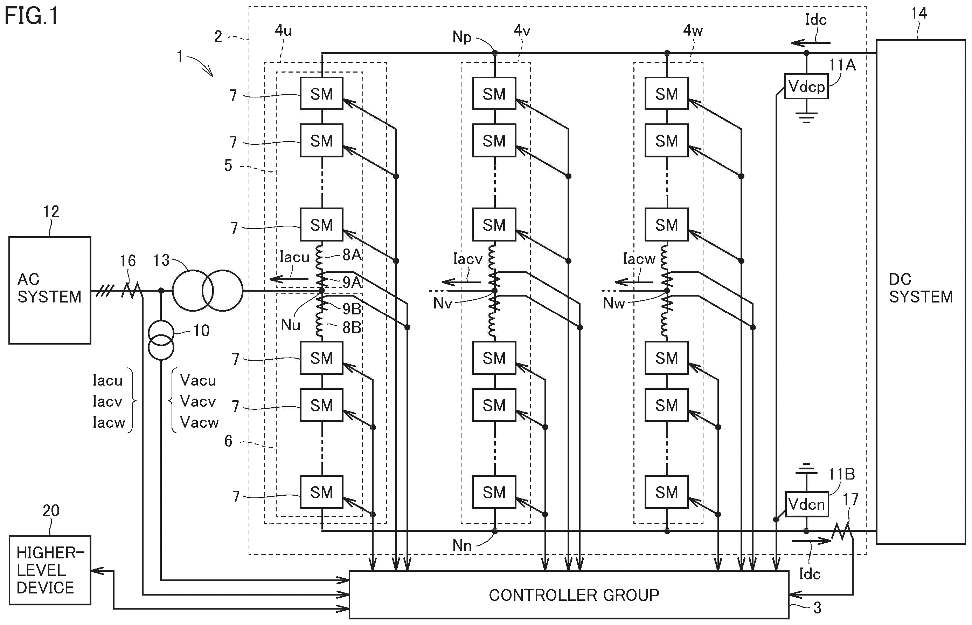

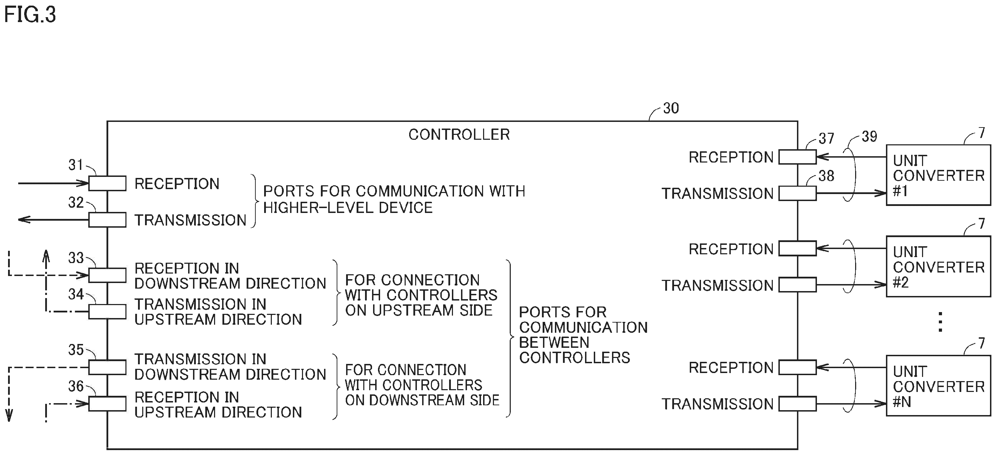

Fig. 1 is a schematic configuration diagram of a power conversion device 1 according to a first embodiment. Referring to Fig. 1, power conversion device 1 is configured in the form of a modular multilevel converter including a plurality of unit converters 7 (also referred to as converter cells 7 or submodules SM) cascaded with each other. Power conversion device 1 performs power conversion between a DC system 14 and an AC system 12. Power conversion device 1 includes a power converter 2, a controller group 3 configured by a plurality of controllers (30 in Figs. 3 to 5), and a higher-level device 20.

Power converter 2 includes a plurality of leg circuits 4u, 4v, 4w (described as a leg circuit 4 when collectively referred to or any one of them is referred to) connected in parallel with each other between a positive DC terminal (i.e., a high-potential-side DC terminal) Np and a negative DC terminal (i.e., a low-potential-side DC terminal) Nn.

Leg circuit 4 is provided for each of a plurality of phases of AC. Leg circuit 4 is connected between AC system 12 and DC system 14, and performs power conversion between these circuits. AC system 12 shown in Fig. 1 is a three-phase AC system, and three leg circuits 4u, 4v, 4w are provided for U phase, V phase, W phase, respectively.

AC input terminals Nu, Nv, Nw provided respectively in leg circuits 4u, 4v, 4w are connected to AC system 12 through a transformer 13. AC system 12 includes an AC power source and the like. To simplify the illustration, Fig. 1 does not show connection between AC input terminals Nv, Nw and transformer 13.

High-potential-side DC terminal Np and low-potential-side DC terminal Nn that are connected commonly to leg circuits 4 are connected to DC system 14. In the case of HVDC power transmission, DC system 14 is a DC transmission network. DC system 14 can also be regarded as a DC terminal of another power conversion device. In this case, two power conversion devices are coupled to form a BTB (Back To Back) system for connecting AC power systems that are different from each other in the rated frequency, for example.

The leg circuits may be connected to AC system 12 through an interconnection reactor, instead of transformer 13 in Fig. 1. Further, instead of AC input terminals Nu, Nv, Nw, primary windings may be provided in respective leg circuits 4u, 4v, 4w, and AC connection from leg circuits 4u, 4v, 4w to transformer 13 or the interconnection reactor may be implemented through secondary windings magnetically coupled with the primary windings. In this case, the primary windings may be reactors 8A, 8B described below. To summarize, electrical connection (i.e., DC or AC connection) from leg circuit 4 to AC system 12 is implemented through connecting parts such as AC input terminals Nu, Nv, Nw or the above-described primary windings provided in respective leg circuits 4u, 4v, 4w.

Leg circuit 4u includes an upper arm circuit 5 from high-potential-side DC terminal Np to AC input terminal Nu, and a lower arm circuit 6 from low-potential-side DC terminal Nn to AC input terminal Nu. A connection point, i.e., AC input terminal Nu, between upper arm circuit 5 and lower arm circuit 6 is connected to transformer 13. High-potential-side DC terminal Np and low-potential-side DC terminal Nn are connected to DC system 14. Upper arm circuit 5 and lower arm circuit 6 are collectively described as an arm circuit. Leg circuits 4v, 4w have a similar configuration to the above-described one, and therefore, the configuration of leg circuit 4u is representatively explained below.

Upper arm circuit 5 includes a plurality of cascaded unit converters 7 and reactor 8A. The plurality of unit converters 7 and reactor 8A are connected in series. Likewise, lower arm circuit 6 includes a plurality of cascaded unit converters 7 and reactor 8B. The plurality of unit converters 7 and reactor 8B are connected in series.

The position in which reactor 8A is inserted may be any position in upper arm circuit 5 of leg circuit 4u, and the position in which reactor 8B is inserted may be any position in lower arm circuit 6 of leg circuit 4u. More than one reactor 8A and more than one reactor 8B may be provided. Inductance values of the reactors may be different from each other. Alternatively, only reactor 8A of upper arm circuit 5, or only reactor 8B of lower arm circuit 6 may be provided. The transformer connection may be adjusted to cancel the magnetic flux of DC component current, and leakage reactance of the transformer may act on AC component current, as an alternative to the reactor. By providing reactors 8A, 8B, a sharp increase of fault current generated in the event of a fault in AC system 12 or DC system 14 can be suppressed.

Power conversion device 1 further includes, as detectors for measuring electrical quantities (current, voltage, and the like) to be used for control, an AC voltage detector 10, an AC current detector 16, DC voltage detectors 11A, 11B, arm current detectors 9A, 9B provided in each leg circuit 4, and a DC current detector 17. Signals detected by these detectors are input to controller group 3. In this case, the signals may be input to each of controllers 30 constituting controller group 3, or may be input to at least one controller 30.

Although some of signal lines for the signals that are input from the detectors to controller group 3 and signal lines for the signals that are input and output between controller group 3 and each unit converter 7 are collectively depicted in Fig. 1 to simplify the illustration, they are, in practice, provided for each detector and each unit converter 7. The signal lines may be provided separately for transmission and reception of the signals between each unit converter 7 and controller group 3. For example, the signal line may be implemented by an optical fiber.

Next, each detector is specifically described. AC voltage detector 10 detects a U phase AC voltage Vacu, a V phase AC voltage Vacv, and a W phase AC voltage Vacw of AC system 12. In the following description, AC voltages Vacu, Vacv, and Vacw of the respective phases are also collectively described as an AC voltage Vac.

AC current detector 16 detects a U phase AC current Iacu, a V phase AC current Iacv, and a W phase AC current Iacw of AC system 12. In the following description, AC currents Iacu, Iacv, and Iacw of the respective phases are also collectively described as an AC current Iac.

DC voltage detector 11A detects a DC voltage Vdcp of high-potential-side DC terminal Np connected to DC system 14. DC voltage detector 11B detects a DC voltage Vdcn of low-potential-side DC terminal Nn connected to DC system 14. The difference between high-potential-side DC voltage Vdcp and low-potential-side DC voltage Vdcn is defined as a DC voltage Vdc.

DC current detector 17 detects a DC current Idc flowing through high-potential-side DC terminal Np or low-potential-side DC terminal Nn.

Arm current detectors 9A and 9B provided in U phase leg circuit 4u detect an upper arm current Ipu flowing in upper arm circuit 5 and a lower arm current Inu flowing in lower arm circuit 6, respectively. Arm current detectors 9A and 9B provided in V phase leg circuit 4v detect an upper arm current Ipv and a lower arm current Inv, respectively. Arm current detectors 9A and 9B provided in W phase leg circuit 4w detect an upper arm current Ipw and a lower arm current Inw, respectively. In the following description, upper arm currents Ipu, Ipv, Ipw are also collectively described as an upper arm current Iarmp, lower arm currents Inu, Inv, Inw are also collectively described as a lower arm current Iarmn, and upper arm current Iarmp and lower arm current Iarmn are also collectively described as an arm current Iarm.

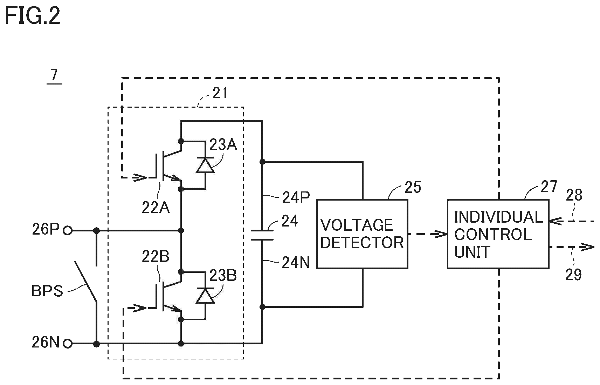

Controller group 3 controls the operation of power converter 2 based on detected values by the respective detectors described above and voltage values of power storage elements (24 in Fig. 2) provided in respective unit converters 7. Each of controllers 30 constituting controller group 3 may be implemented by a computer including a CPU, a memory and the like, or may be at least partially implemented by a PLD (Programmable Logic Device) such as an FPGA (Field Programmable Gate Array) and/or a dedicated circuit such as an ASIC (Application Specific Integrated Circuit).

Higher-level device 20 is connected to controller group 3 through a communication path and controls an entire power system including controller group 3. For example, higher-level device 20 may be a monitoring and control device that performs monitoring and control of a power transmission line, or may be an HMI (Human Machine Interface) terminal that is an operation terminal provided in an AC/DC conversion station or a frequency conversion station. Similarly to each controller 30, higher-level device 20 may also be implemented by a computer including a CPU, a memory and the like, or may be at least partially implemented by a PLD such as an FPGA and/or a dedicated circuit such as an ASIC.

### [Configuration Example of Unit Converter]

Fig. 2 is a circuit diagram showing an example of the unit converter constituting each leg circuit in Fig. 1. Unit converter 7 shown in Fig. 2 includes a half-bridge-type conversion circuit 21, a power storage element 24, a voltage detector 25, an individual control unit 27, and a bypass switch BPS. Conversion circuit 21 is also referred to as a bridge circuit.

Half-bridge-type conversion circuit 21 includes switching elements 22A, 22B connected in series with each other, and diodes 23A, 23B. Diodes 23A, 23B are connected in anti-parallel (i.e., in parallel in the reverse-bias direction) with switching elements 22A, 22B, respectively. Diodes 23A, 23B are provided for protection when a reverse voltage is applied to switching elements 22A, 22B. Switching elements 22A, 22B and diodes 23A, 23B are hereinafter described as a switching element 22 and a diode 23, respectively, when collectively referred to or any one of them is referred to.

Power storage element 24 is connected in parallel with the series-connected circuit made up of switching elements 22A, 22B and holds a DC voltage. A DC capacitor is typically used as power storage element 24. A connection node between switching elements 22A, 22B is connected to a high-potential-side input/output terminal 26P. A connection node between switching element 22B and power storage element 24 is connected to a low-potential-side input/output terminal 26N.

Typically, input/output terminal 26P is connected to input/output terminal 26N of the unit converter adjacent on the positive electrode side. Input/output terminal 26N is connected to input/output terminal 26P of the unit converter adjacent on the negative electrode side.

As each of switching elements 22A, 22B, a self-arc-extinguishing-type switching element is used, of which ON operation and OFF operation can both be controlled. An IGBT (Insulated Gate Bipolar Transistor) or a GCT (Gate Commutated Turn-off thyristor) is used, for example, as each of switching elements 22A, 22B.

The conversion circuit of the unit converter is not limited to half-bridge-type conversion circuit 21 as described above. For example, a full-bridge-type conversion circuit or a three-quarter-bridge-type conversion circuit may be used to form the unit converter.

Bypass switch BPS is connected between input/output terminals 26P and 26N. For example, a mechanical switch is used as bypass switch BPS. When bypass switch BPS is turned on, high-potential-side input/output terminal 26P and low-potential-side input/output terminal 26N are short-circuited.

Bypass switch BPS is used to short-circuit unit converter 7 when any of the elements of this unit converter 7 fails. Thus, even when any of the plurality of unit converters fails, the operation of power conversion device 1 can be continued using other unit converters. A determination of whether or not to turn on bypass switch BPS may be made by corresponding controller 30 of controller group 3 or by individual control unit 27 of each unit converter.

Voltage detector 25 detects a voltage across power storage element 24 (i.e., a capacitor voltage Vc). A detected value at voltage detector 25 is input to individual control unit 27.

Individual control unit 27 receives various commands 28 including a control command and a protection command from corresponding controller 30 of controller group 3. Based on received various commands 28, individual control unit 27 generates a gate signal for controlling opening/closing of switching elements 22A, 22B constituting conversion circuit 21. Individual control unit 27 further transmits a signal 29 to corresponding controller 30 of controller group 3, signal 29 including abnormality determination information on the unit converter, the capacitor voltage detected by voltage detector 25, and opening/closing information on bypass switch BPS.

Specifically, when a voltage command value as the control command is received, individual control unit 27 performs phase shift PWM (Pulse Width Modulation) control to cause one of switching elements 22A, 22B to enter the ON state and the other to enter the OFF state based on the received voltage command value.

Specifically, while switching element 22A is in the ON state and switching element 22B is in the OFF state, the voltage across power storage element 24 is applied between input/output terminals 26P and 26N. Conversely, while switching element 22A is in the OFF state and switching element 22B is in the ON state, the voltage between input/output terminals 26P and 26N is 0V. Thus, the unit converter can cause switching elements 22A, 22B to enter the ON state alternately to thereby output a zero voltage and a positive voltage depending on the voltage of power storage element 24.

When a gate block command as the protection command is received, individual control unit 27 causes all of switching elements 22A, 22B constituting conversion circuit 21 to enter the OFF state.

Individual control unit 27 further performs self-diagnosis to determine whether or not the corresponding unit converter has failed. The self-diagnosis generally involves determining whether or not capacitor voltage Vc is abnormal (i.e., is equal to or higher than an upper threshold value, or equal to or lower than a lower threshold value). Individual control unit 27 may be configured to perform self-diagnosis to determine an abnormality of the power source, an abnormality of a communication system and the like, in addition to the abnormality of capacitor voltage Vc.

Individual control unit 27 described above may be implemented by a dedicated circuit such as an ASIC (Application Specific Integrated Circuit), or may be implemented using an FPGA (Field Programmable Gate Array) or the like. Alternatively, it may be implemented based on a computer including a CPU (Central Processing Unit) and a memory, or may be implemented by a combination of two or more of the above.

The unit converter is provided with a power source circuit (not shown) that generates a drive voltage for individual control unit 27 based on the voltage of power storage element 24. Individual control unit 27 is therefore unable to operate when the voltage of power storage element 24 is low.

### [Manner of Communication Connection (Network Topology)]

Fig. 3 is a diagram for illustrating a configuration of a plurality of communication ports of each of controllers 30 constituting controller group 3 in Fig. 1.

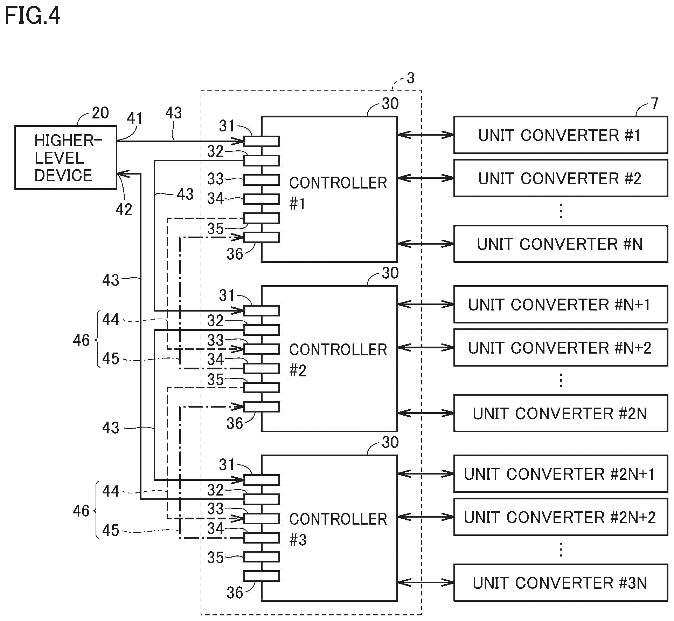

Referring to Fig. 3, each controller 30 communicates with higher-level device 20 through a first network 43 of ring-shaped daisy chain type (a communication path indicated by a solid line in Fig. 4). In the present embodiment, this communication is referred to as higher-level device communication. Each controller 30 includes a reception port 31 and a transmission port 32 as communication ports for the higher-level device communication.

Each controller 30 further communicates with the other controllers 30 through a second network 46 of line-shaped (i.e., linear) daisy chain type (i.e., a communication path 44 indicated by a dashed line and a communication path 45 indicated by a dash-dot line in Fig. 4). In the present embodiment, this communication is referred to as inter-controller communication. Each controller 30 includes reception ports 33, 36 and transmission ports 34, 35 as communication ports for the inter-controller communication. Reception port 33 and transmission port 34 are provided for communication with controllers 30 on the upstream side of the daisy chain, and transmission port 35 and reception port 36 are provided for communication with controllers 30 on the downstream side of the daisy chain.

Each controller 30 further includes a plurality of reception ports 37 and a plurality of transmission ports 38 for connection with N unit converters 7 corresponding thereto. Each unit converter 7 is connected to corresponding reception port 37 and transmission port 38 through an optical fiber cable 39. Although the manner of connection between each controller 30 and the plurality of unit converters 7 corresponding thereto is of star type in Fig. 3 and Fig. 4 referred to next, other manners of connection such as a daisy chain type may be used.

Fig. 4 is a diagram for illustrating the manner of communication connection between the higher-level device and the controller group. Although an example in which controller group 3 is configured by three controllers (#1 to #3) 30 is shown in Fig. 4 by way of example, the number of controllers 30 is not limited to that in this example and may be two or four or more.

Referring to Fig. 4, higher-level device 20 and three controllers (#1 to #3) 30 are connected to each other through first network 43 of ring-shaped daisy chain type (the communication path indicated by the solid line in the figure). Specifically, a transmission port 41 of higher-level device 20 is connected to reception port 31 of controller #1. Transmission port 32 of controller #1 is connected to reception port 31 of controller #2. Transmission port 32 of controller #2 is connected to reception port 31 of controller #3. Transmission port 32 of controller #3 is connected to a reception port 42 of higher-level device 20. Therefore, communication data is transmitted in order of higher-level device 20, controller #1, controller #2, controller #3, and higher-level device 20 through this ring-shaped first network 43.

Furthermore, in addition to the above-described first network, three controllers (#1 to #3) 30 except for higher-level device 20 are connected to each other through second network 46 of line-shaped daisy chain type (communication path 44 indicated by the dashed line and communication path 45 indicated by the dash-dot line in the figure). Specifically, transmission port 35 and reception port 36 of controller #1 are connected to reception port 33 and transmission port 34 of controller #2, respectively. Transmission port 35 and reception port 36 of controller #2 are connected to reception port 33 and transmission port 34 of controller #3, respectively.

In the present embodiment, communication in the downstream direction and communication in the upstream direction are performed through this line-shaped second network 46. In the communication in the downstream direction, communication data is transmitted in order of controller #1, controller #2 and controller #3 through communication path 44 indicated by the dashed line in the figure. In the communication in the upstream direction, communication data is transmitted in order of controller #3, controller #2 and controller #1 through communication path 45 indicated by the dash-dot line in the figure.

Controller #1 is connected to N unit converters (#1 to #N) 7 corresponding thereto in the star-type manner. Similarly, controller #2 is connected to N unit converters (#N+1 to #2N) 7 corresponding thereto in the star-type manner. Controller #3 is connected to N unit converters (#2N+1 to #3N) 7 corresponding thereto in the star-type manner. For example, unit converters (#1 to #N) 7 constitute U phase leg circuit 4u, unit converters (#N+1 to #2N) 7 constitute V phase leg circuit 4v, and unit converters (#2N+1 to #3N) 7 constitute W phase leg circuit 4w.

Although the manner of communication connection between each controller 30 and the plurality of unit converters 7 corresponding thereto is described as the star type in the present embodiment, other manners of connection such as a ring type may be used. In addition, the number of unit converters 7 corresponding to each controller 30 may be different from the number of unit converters 7 corresponding to another controller 30.

In addition, the correspondence between controller 30 and the plurality of unit converters 7 is not limited to that in the above-described case. For example, when six controllers (#1 to #6) 30 are provided, controllers #1 to #6 may correspond to U phase upper arm circuit 5, U phase lower arm circuit 6, V phase upper arm circuit 5, V phase lower arm circuit 6, W phase upper arm circuit 5, and W phase lower arm circuit 6, respectively.

### [Example of Hardware Configuration of Controller]

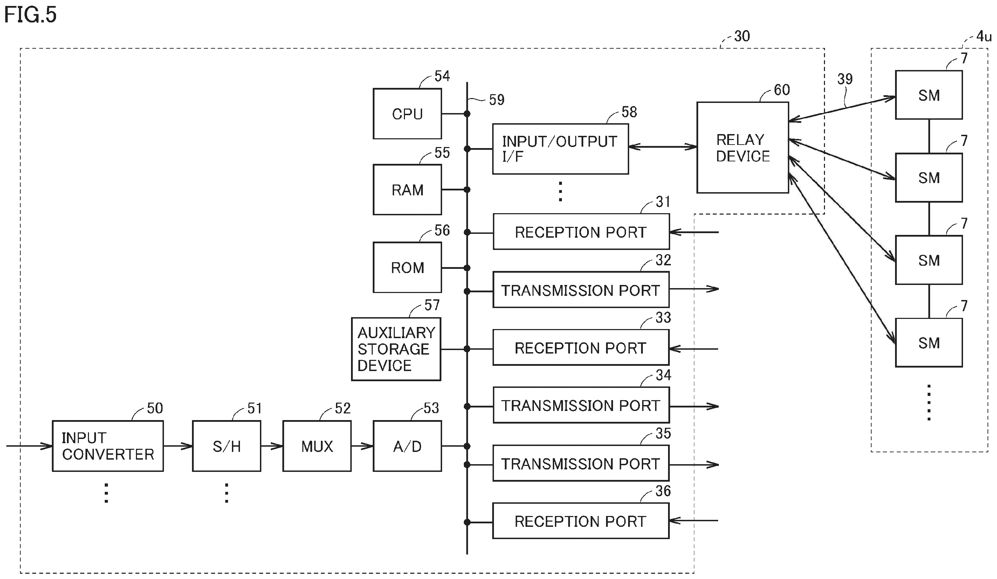

Fig. 5 is a block diagram showing a hardware configuration example of the controller. Fig. 5 shows an example in which controller 30 is implemented by a computer. Further, in the example shown in Fig. 5, the computer is connected to each unit converter 7 through a relay device 60.

Referring to Fig. 5, controller 30 includes a plurality of input converters 50, a plurality of sample hold (S/H) circuits 51, a multiplexer (MUX) 52, and an A/D (Analog-to-Digital) converter 53, one or more CPUs 54, a RAM (Random Access Memory) 55, a ROM (Read Only Memory) 56, an auxiliary storage device 57, a plurality of input/output interfaces (I/Fs) 58, reception ports 31, 33 and 36, transmission ports 32, 34 and 35, and a bus 59 connecting the above-described components to one another. Input converters 50, sample hold circuits 51, multiplexer 52, and A/D converter 53 are provided only in controller 30 that captures detection signals from various electrical quantity detectors described with reference to Fig. 1.

Input converter 50 is provided for each input channel and converts a detection signal from the corresponding electrical quantity detector into a signal at a voltage level suitable for subsequent signal processing.

Sample hold circuit 51 is provided for each input converter 50. Sample hold circuit 51 samples and holds a signal representing the electrical quantity received from corresponding input converter 50 at a prescribed sampling frequency.

Multiplexer 52 sequentially selects signals held by the plurality of sample hold circuits 51. A/D converter 53 converts a signal selected by multiplexer 52 into a digital value. By providing a plurality of A/D converters 53, A/D conversion may be executed in parallel for detection signals of a plurality of input channels.

CPU 54 controls controller 30 as a whole, and performs computational processing in accordance with a program. RAM 55 as a volatile memory and ROM 56 as a nonvolatile memory are used as a main memory of CPU 54. ROM 56 stores a program, set values for signal processing, and the like. Auxiliary storage device 57 is a nonvolatile memory having a larger capacity than ROM 56, and stores a program, data such as electrical quantity detected values, and the like.

Input/output interfaces 58 are interface circuits for communication between CPU 54 and an external device. In the case of Fig. 1, CPU 54 or the like is connected to relay device 60 via one input/output interface 58.

Unlike the example of Fig. 5, controller 30 can at least partially be implemented using a circuit such as an FPGA and an ASIC. The function of each functional block can at least partially be implemented by an analog circuit.

In the present embodiment, relay device 60 is connected to each unit converter 7 through a star-type network. Typically, relay device 60 is implemented by a dedicated circuit and may be partially or entirely implemented by an FPGA.

Relay device 60 transmits the control command, the protection command or the like received from CPU 54 to each corresponding unit converter 7. Further, relay device 60 receives a value of the voltage of power storage element 24 (i.e., capacitor voltage Vc) measured by voltage detector 25 of each corresponding unit converter 7. Although relay device 60 is not a required component, the provision of relay device 60 can suppress traffic and throughput of CPU 54, thereby enabling fast and low latency communication with a small number of communication lines.

As described with reference to Figs. 3 and 4, reception port 31 and transmission port 32 are used for communication with higher-level device 20 and another controller 30 through the ring-shaped first network. Reception ports 33 and 36 and transmission ports 34 and 35 are used for communication with the other controllers 30 through the line-shaped second network.

### [Processing Flow of Each Controller and Higher-Level Device]

Next, a processing flow performed by each of a plurality of controllers 30 and higher-level device 20 will be described, given the network configuration described with reference to Figs. 3 and 4.

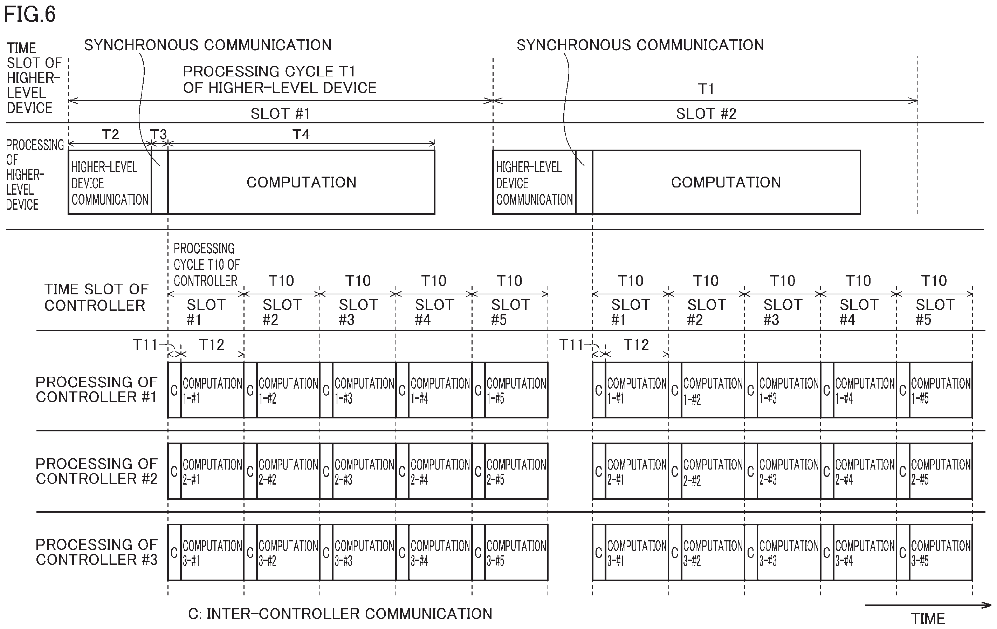

Fig. 6 is a timing chart for illustrating a processing flow of each of the higher-level device and controllers #1 to #3 in Fig. 4. Referring to Fig. 6, in higher-level device 20, a time period T2 for performing the higher-level device communication, a time period T3 for performing time synchronization communication, and a time period T4 for performing computational processing are sequentially set for each processing cycle T1. Processing cycle T1 is also referred to as a time slot and slot numbers starting from #1 are sequentially given. In the present disclosure, the processing cycle is also referred to as a control cycle.

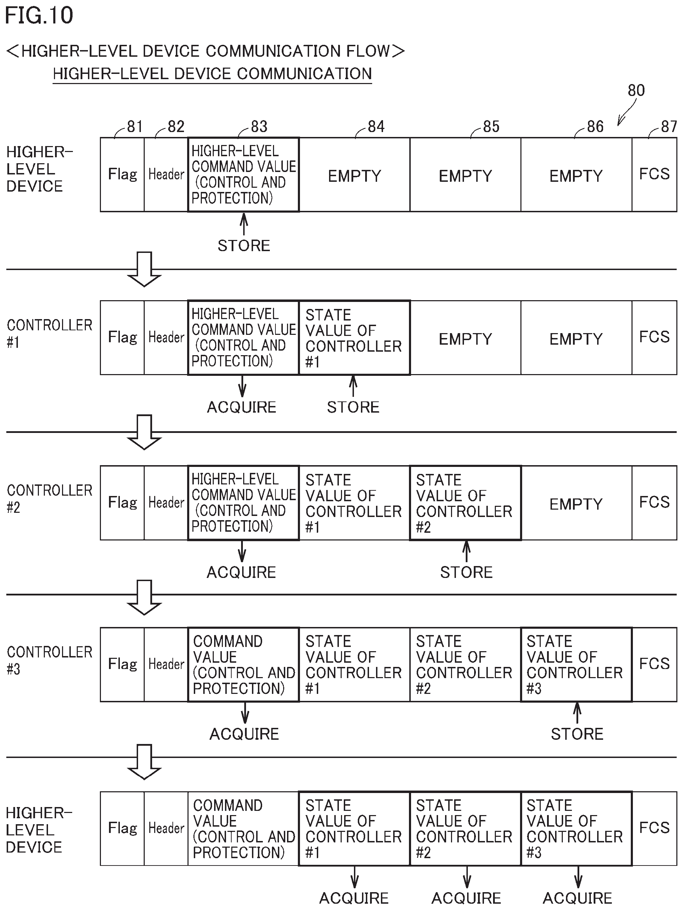

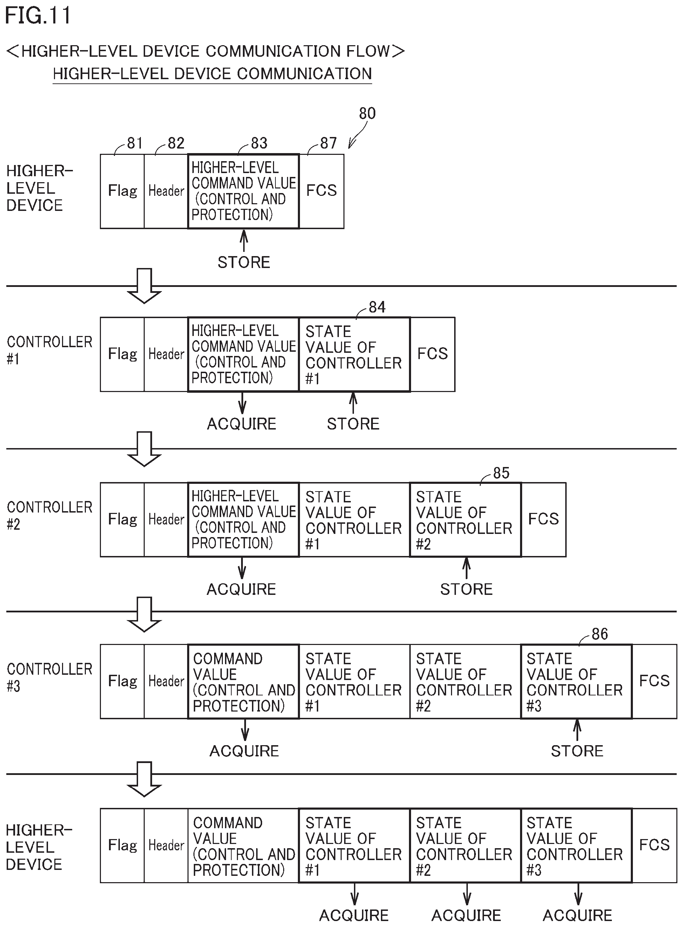

As already described, the higher-level device communication refers to communication through first network 43 of ring-shaped daisy chain type (the communication path indicated by the solid line in Fig. 4). In the higher-level device communication, data is exchanged between higher-level device 20 and each controller 30. A specific procedure of the higher-level device communication will be described below with reference to Figs. 10 and 11.

The time synchronization communication is performed to match the control processing timings of a plurality of controllers 30. For example, higher-level device 20 transmits a time synchronization signal to each controller 30 through ring-shaped first network 43. Each controller 30 performs control processing based on the received time synchronization signal. In this case, the time synchronization signal is transmitted through an optical fiber and a distance between the controllers is short, and thus, transmission delay of the time synchronization signal does not matter.

In each controller 30, a plurality of processing periods starting from the time synchronization communication are set to correspond to each processing cycle T1 (slot) of higher-level device 20. For example, in the case of Fig. 6, in each controller 30, five processing cycles starting from the time synchronization communication are set to correspond to each processing cycle T1 of higher-level device 20. A processing cycle T10 of each controller 30 is also referred to as a time slot and slot numbers starting from #1 are sequentially given to correspond to each processing cycle of higher-level device 20. In the case of Fig. 6, the slot numbers from #1 to #5 are given.

Assuming that processing cycle T1 of higher-level device 20 is 100 microseconds as an example, processing cycle T10 of each controller 30 is shorter than processing cycle T1 of higher-level device 20 and is approximately 10 microseconds, for example. In this case, controller 30 can perform processing over seven to eight cycles to correspond to each processing cycle of higher-level device 20.

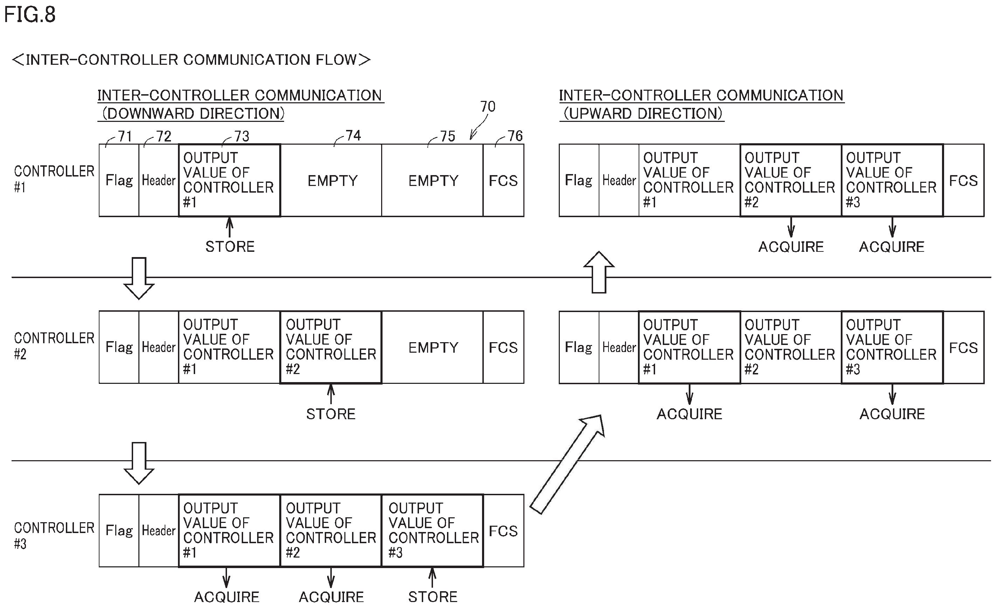

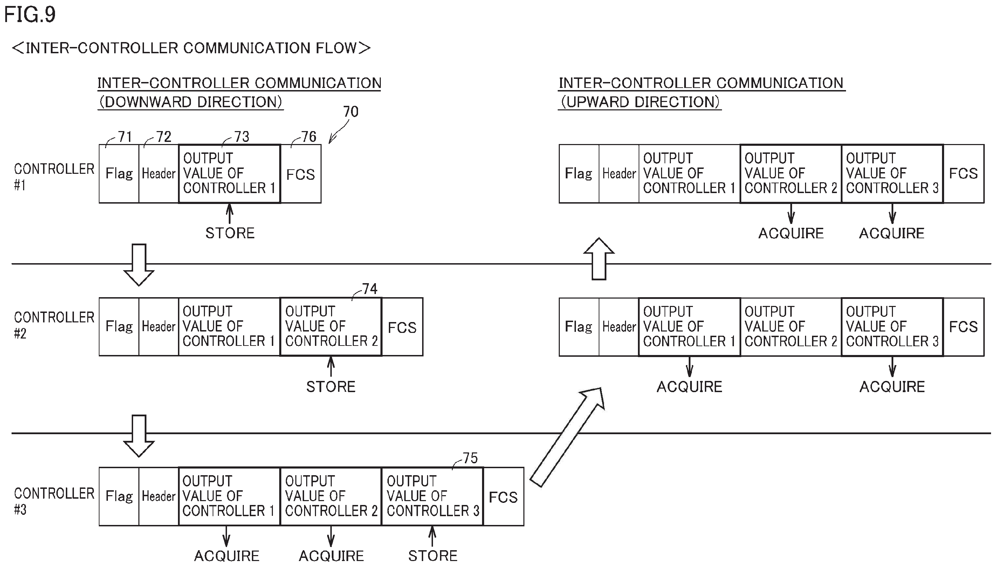

In each controller 30, a time period T11 for the inter-controller communication and a time period T12 for computational processing are sequentially set for each processing cycle T10. As already described, the inter-controller communication refers to communication through second network 46 of line-shaped daisy chain type (communication path 44 in the downward direction indicated by the dashed line and communication path 45 in the upward direction indicated by the dash-dot line in Fig. 4). In the inter-controller communication, each controller 30 exchanges data with the other controllers 30. A specific procedure of the inter-controller communication will be described below with reference to Figs. 8 and 9.

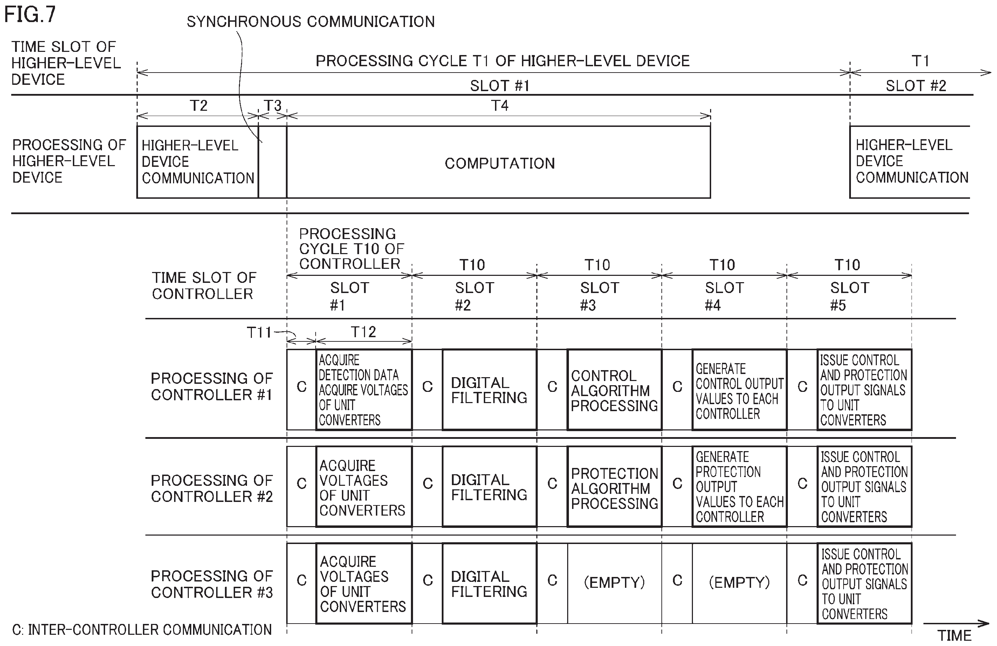

A series of processing for controlling power converter 2, which is performed for each processing cycle T1, is divided into pieces, which are assigned to computation portions (time periods: T12) of the respective slots. Fig. 7 shows an example of processing assigned to a slot of each computing device.

Referring to Fig. 7, in a slot #1 of controller 30, each controller 30 acquires voltage values of power storage elements 24 (also referred to as capacitor voltage values Vc) from N unit converters 7 connected to the controller itself. Furthermore, first controller #1 acquires a detected value of AC voltage Vac from AC voltage detector 10, acquires a detected value of AC current Iac from AC current detector 16, acquires a detected value of DC voltage Vdc from DC voltage detectors 11A and 11B, acquires a detected value of DC current Idc from DC current detector 17, and acquires a detected value of arm current Iarm from arm current detectors 9A and 9B.

In a next slot #2, each controller 30 performs digital filtering on acquired N corresponding capacitor voltage values Vc. Furthermore, first controller #1 performs digital filtering on the acquired detected values from the respective detectors.

Through the inter-controller communication in a next slot #3, the results of digital filtering in slot #2 are distributed to controllers 30. That is, all of controllers (#1 to #3) 30 share capacitor voltage values Vc of all of unit converters 7 and the detected values from the respective detectors.

In a computation period of slot #3, first controller #1 performs control algorithm processing based on capacitor voltage values Vc of all of unit converters 7 and the detected values from the respective detectors, and the control command value acquired from higher-level device 20 through the higher-level device communication. Second controller #2 performs protection algorithm processing based on capacitor voltage values Vc of all of unit converters 7 and the detected values from the respective detectors, and the protection command value acquired from higher-level device 20 through the higher-level device communication. Processing is not assigned to third processing device #3.

In a next slot #4, first controller #1 generates a control output value to each of unit converters 7 constituting power converter 2, based on the result of the control algorithm processing in slot #3. Second controller #2 generates a protection output value to each of unit converters 7 constituting power converter 2, based on the result of the protection algorithm processing in slot #3. Processing is not assigned to third processing device #3.

Through the inter-controller communication in a next slot #5, the results of the processing in controller #1 and controller #2 in slot #4 are distributed to controllers 30. That is, all of controllers (#1 to #3) 30 share the control output values and the protection output values to respective unit converters 7.

In a computation period of slot #5, each controller 30 issues control and protection output signals to individual control units 27 of N corresponding unit converters 7 connected to the controller itself, based on the control output values and the protection output values. In this way, the processing flow of each controller 30 corresponding to one time slot of higher-level device 20 is completed.

### [Inter-Controller Communication Flow]

Next, an inter-controller communication flow set for each time slot of each controller 30 will be described. Fig. 8 is a diagram for illustrating an inter-controller communication flow performed using a communication frame having a fixed length.

As described with reference to Fig. 4, in the inter-controller communication, second network 46 of line-shaped daisy chain type (communication path 44 indicated by the dashed line and communication path 45 indicated by the dash-dot line in Fig. 4) is used. Specifically, as shown in Fig. 8, a communication frame 70 is first transmitted from controller #1 provided at a first end (most upstream) of the line-shaped daisy chain to controller #3 provided at a second end (most downstream) of the line-shaped daisy chain through communication path 44 indicated by the dashed line in Fig. 4. In the present specification, this first transmission direction is referred to as the downstream direction or the downward direction. Next, communication frame 70 is transmitted from controller #3 to controller #1 in the reverse direction through communication path 45 indicated by the dash-dot line in Fig. 4. In the present specification, this second transmission direction is referred to as the upstream direction or the upward direction.

In the case of Fig. 8, communication frame 70 has a fixed length and includes a flag (Flag) field 71, a header (Header) field 72, data fields 73 to 75, and an FCS (Frame Check Sequence) field 76.

Flag field 71 stores a code indicating the beginning of communication frame 70. For example, in the 8B10B encoding scheme, a control symbol called K code is used.

Header field 72 stores a type code, a sequence number and the like of the communication frame. For example, different type codes are set for the downward direction and the upward direction.

Data field 73 stores an output value of controller #1. For example, the output value of controller #1 in slot #3 in Fig. 7 includes capacitor voltage values Vc of corresponding unit converters (#1 to #N) 7 and the detected values from the respective detectors.

Data field 74 stores an output value of controller #2. For example, the output value of controller #2 in slot #3 in Fig. 7 includes capacitor voltage values Vc of corresponding unit converters (#N+1 to #2N) 7.

Data field 75 stores an output value of controller #3. For example, the output value of controller #3 in slot #3 in Fig. 7 includes capacitor voltage values Vc of corresponding unit converters (#2N+1 to #3N) 7.

FCS field 76 stores a code for detecting an error of communication frame 70. A CRC (Cyclic Redundancy Check) code is, for example, used as the error detection code.

As shown in Fig. 8, above-described communication frame 70 is generated in controller #1. Controller #1 stores its own output value in data field 73. Although controller #1 maintains data fields 74 and 75, controller #1 does not store any data in these data fields. In addition, controller #1 stores the type code indicating the communication in the downward direction in header field 72. Controller #1 transmits generated communication frame 70 to controller #2.

Controller #2 stores its own output value in data field 74 of communication frame 70 received from controller #1. Furthermore, controller #2 updates the error detection code stored in FCS field 76. Controller #2 transmits updated communication frame 70 to controller #3.

Controller #3 stores its own output value in data field 75 of communication frame 70 received from controller #2, updates the type code indicating the communication in the downward direction stored in header field 72 to the type code indicating the communication in the upward direction, and thereafter, updates the error detection code stored in FCS field 76. Furthermore, controller #3 acquires the output values of controllers #1 and #2 other than controller #3 itself stored in data fields 73 and 74. Controller #3 transmits updated communication frame 70 to controller #2.

Controller #2 acquires the output values of controllers #1 and #3 other than controller #2 itself stored in data fields 73 and 75 of communication frame 70 received from controller #3. Controller #2 transmits communication frame 70 received from controller #3 to controller #1.

Controller #1 acquires the output values of controllers #2 and #3 other than controller #1 itself stored in data fields 74 and 75 of communication frame 70 received from controller #2. In this way, the inter-controller communication flow using the communication frame having the fixed length ends.

Fig. 9 is a diagram for illustrating an inter-controller communication flow performed using a communication frame having a variable length. In the example of Fig. 9, a required data field is added when each controller 30 stores its own output value in communication frame 70.

Specifically, controller #1 generates communication frame 70 including flag field 71, header field 72, data field 73, and FCS field 76. Data field 73 stores the output value of controller #1. Header field 72 stores the type code indicating the communication in the downward direction. Controller #1 transmits generated communication frame 70 to controller #2.

Controller #2 adds data field 74 between data field 73 and FCS field 76 of communication frame 70 received from controller #1. Controller #2 stores its own output value in added data field 74. Furthermore, controller #2 updates the error detection code stored in FCS field 76. Controller #2 transmits updated communication frame 70 to controller #3.

Controller #3 adds data field 75 between data field 74 and FCS field 76 of communication frame 70 received from controller #2. Controller #3 stores its own output value in added data field 75, updates the type code indicating the communication in the downward direction stored in header field 72 to the type code indicating the communication in the upward direction, and thereafter, updates the error detection code stored in FCS field 76.

Furthermore, controller #3 acquires the output values of controllers #1 and #2 other than controller #3 itself stored in data fields 73 and 74. Controller #3 transmits updated communication frame 70 to controller #2. Since the subsequent operation of controllers #2 and #1 in the communication in the upward direction is the same as that in the case of Fig. 8, description will not be repeated.

### [Higher-Level Device Communication Flow]

Next, a higher-level control communication flow set for each time slot of higher-level device 20 will be described. Fig. 10 is a diagram for illustrating a higher-level device communication flow performed using a communication frame having a fixed length.

As described with reference to Fig. 4, in the higher-level device communication, first network 43 of loop-shaped daisy chain type (the communication path indicated by the solid line in Fig. 4) is used. Specifically, as shown in Fig. 10, a communication frame 80 is generated and sent by higher-level device 20 and is transmitted in order of controller #1, controller #2, controller #3, and higher-level device 20.

In the case of Fig. 10, communication frame 80 has a fixed length and includes a flag field 81, a header field 82, data fields 83 to 86, and an FCS field 87. Similarly to the inter-controller communication in Fig. 8, flag field 81 stores a code indicating the beginning of communication frame 80. Header field 82 stores a type code, a sequence number and the like of the communication frame. FCS field 87 stores a code for detecting an error of communication frame 80.

Data field 83 stores a higher-level command value output from higher-level device 20. The higher-level command value includes a control command and a protection command. Data field 84 stores a state value of controller #1. Data field 85 stores a state value of controller #2. Data field 86 stores a state value of controller #3.

Each of the above-described state values includes, for example, information indicating an operating state (i.e., whether or not the controller is in operation), information indicating a degree and a type of failure, and the like. The state value of each controller 30 includes state values of N unit converters 7 connected to this controller 30.

As shown in Fig. 10, above-described communication frame 80 is generated in higher-level device 20. Higher-level device 20 stores the higher-level command value in data field 83. Although higher-level device 20 maintains data fields 84 to 86, higher-level device 20 does not store any data in these data fields. Higher-level device 20 transmits generated communication frame 80 to controller #1.

Controller #1 acquires the higher-level command value stored in data field 83 of communication frame 80 received from higher-level device 20. Furthermore, controller #1 stores its own state value and the state values of N corresponding unit converters 7 connected to controller #1 in data field 84 of communication frame 80. Furthermore, controller #1 updates the error detection code stored in FCS field 87. Controller #1 transmits updated communication frame 80 to controller #2.

Controller #2 acquires the higher-level command value stored in data field 83 of communication frame 80 received from controller #1. Furthermore, controller #2 stores its own state value and the state values of N corresponding unit converters 7 connected to controller #2 in data field 85 of communication frame 80. Furthermore, controller #2 updates the error detection code stored in FCS field 87. Controller #2 transmits updated communication frame 80 to controller #3.

Controller #3 acquires the higher-level command value stored in data field 83 of communication frame 80 received from controller #2. Furthermore, controller #3 stores its own state value and the state values of N corresponding unit converters 7 connected to controller #3 in data field 86 of communication frame 80. Furthermore, controller #3 updates the error detection code stored in FCS field 87. Controller #3 transmits updated communication frame 80 to higher-level device 20.

Higher-level device 20 acquires the state values of controllers #1 to #3 stored in data fields 84 to 86 of communication frame 80 received from controller #3. The acquired state values of controllers 30 are used as inputs for computational processing of the higher-level device itself. In this way, the higher-level device communication flow using the communication frame having the fixed length ends.

Fig. 11 is a diagram for illustrating a higher-level device communication flow performed using a communication frame having a variable length. In the example of Fig. 11, a required data field is added when each controller 30 stores its own state value in communication frame 80.

Specifically, higher-level device 20 generates communication frame 80 including flag field 81, header field 82, data field 83, and FCS field 87. Data field 83 stores the higher-level command value. Higher-level device 20 transmits generated communication frame 80 to controller #1.

Controller #1 acquires the higher-level command value stored in data field 83 of communication frame 80 received from higher-level device 20. Furthermore, controller #1 adds data field 84 between data field 83 and FCS field 87 of communication frame 80. Controller #1 stores its own state value and the state values of N corresponding unit converters 7 connected to controller #1 in added data field 84. Furthermore, controller #1 updates the error detection code stored in FCS field 87. Controller #1 transmits updated communication frame 80 to controller #2.

Controller #2 acquires the higher-level command value stored in data field 83 of communication frame 80 received from controller #1. Furthermore, controller #2 adds data field 85 between data field 84 and FCS field 87 of communication frame 80. Controller #2 stores its own state value and the state values of N corresponding unit converters 7 connected to controller #2 in added data field 85. Furthermore, controller #2 updates the error detection code stored in FCS field 87. Controller #2 transmits updated communication frame 80 to controller #3.

Controller #3 acquires the higher-level command value stored in data field 83 of communication frame 80 received from controller #2. Furthermore, controller #3 adds data field 86 between data field 85 and FCS field 87 of communication frame 80. Controller #3 stores its own state value and the state values of N corresponding unit converters 7 connected to controller #3 in added data field 86. Furthermore, controller #3 updates the error detection code stored in FCS field 87. Controller #3 transmits updated communication frame 80 to higher-level device 20.

Higher-level device 20 acquires the state values of controllers #1 to #3 stored in data fields 84 to 86 of communication frame 80 received from controller #3. The acquired state values of controllers 30 are used as inputs for computational processing of the higher-level device itself. In this way, the higher-level device communication flow using the communication frame having the variable length ends.

### [Summary of First Embodiment]

The features of the above-described first embodiment will be summarized below. As described with reference to Fig. 4, in power conversion device 1 according to the first embodiment, all of controllers 30 constituting controller group 3 are connected to higher-level device 20 through first network 43 that is the ring-shaped daisy chain. Furthermore, all of controllers 30 constituting controller group 3 are connected to each other through second network 46 that is the line-shaped daisy chain.

As described with reference to Fig. 8, the inter-controller communication through second network 46 includes the following procedure.
(i) First controller 30 (#1) connected to the first end of second network 46 generates first communication frame 70 that stores data to be shared with the other controllers 30 (#2, #3), and transmits generated first communication frame 70 toward second controller 30 (#3) connected to the second end of second network 46.
(ii) Upon receiving first communication frame 70 transmitted from first controller 30 (#1), each controller 30 (#2) connected to second network 46 between first controller 30 (#1) and second controller 30 (#3) stores data to be shared with the other controllers 30 (#1, #3) in first communication frame 70, and then, transmits first communication frame 70 toward second controller 30 (#3).
(iii) Upon receiving first communication frame 70 transmitted from first controller 30 (#1), second controller 30 (#3) stores data to be shared with the other controllers 30 (#1, #2) in first communication frame 70, acquires the data stored in first communication frame 70 by the other controllers 30 (#1, #2), and then, transmits first communication frame 70 toward first controller 30 (#1).
(iv) Upon receiving first communication frame 70 transmitted from second controller 30 (#3), each controller 30 (#2) connected to second network 46 between first controller 30 (#1) and second controller 30 (#3) acquires the data stored in first communication frame 70 by the other controllers 30 (#1, #3), and then, transmits first communication frame 70 toward first controller 30 (#1).
(v) Upon receiving first communication frame 70 transmitted from second controller 30 (#3), first controller 30 (#1) acquires the data stored in first communication frame 70 by the other controllers 30 (#2, #3).

Furthermore, as described with reference to Fig. 10, the higher-level device communication through the first network includes the following procedure.
(i) Higher-level device 20 generates second communication frame 80 that stores data to be transmitted to each controller 30 of controller group 3, and outputs generated second communication frame 80 to first network 43.
(ii) Upon receiving second communication frame 80 through first network 43, each controller 30 of controller group 3 acquires the data stored in second communication frame 80 by higher-level device 20, and stores data to be transmitted to higher-level device 20 in second communication frame 80.
(iii) Upon receiving second communication frame 80 through first network 43, higher-level device 20 acquires the data stored in second communication frame 80 by each controller 30 of controller group 3.

As described above, the plurality of controllers 30 constituting controller group 3 can exchange the data required for processing among the controllers through the above-described inter-controller communication and the above-described higher-level device communication. Thus, the plurality of controllers 30 constituting controller group 3 can control power converter 2 in a short cycle in coordination with each other.

### Second Embodiment.

In a second embodiment, a case in which controller group 3 is divided into a plurality of subgroups 90 will be described. In this case, data is exchanged between higher-level device 20 and representative (specifically, most upstream) controller 30 of each subgroup 90 through a network of ring-shaped daisy chain type. Furthermore, data is exchanged among a plurality of controllers 30 constituting each subgroup 90 through a network of line-shaped daisy chain type. This will be described in detail below with reference to the drawings.

### [Manner of Communication Connection (Network Topology)]

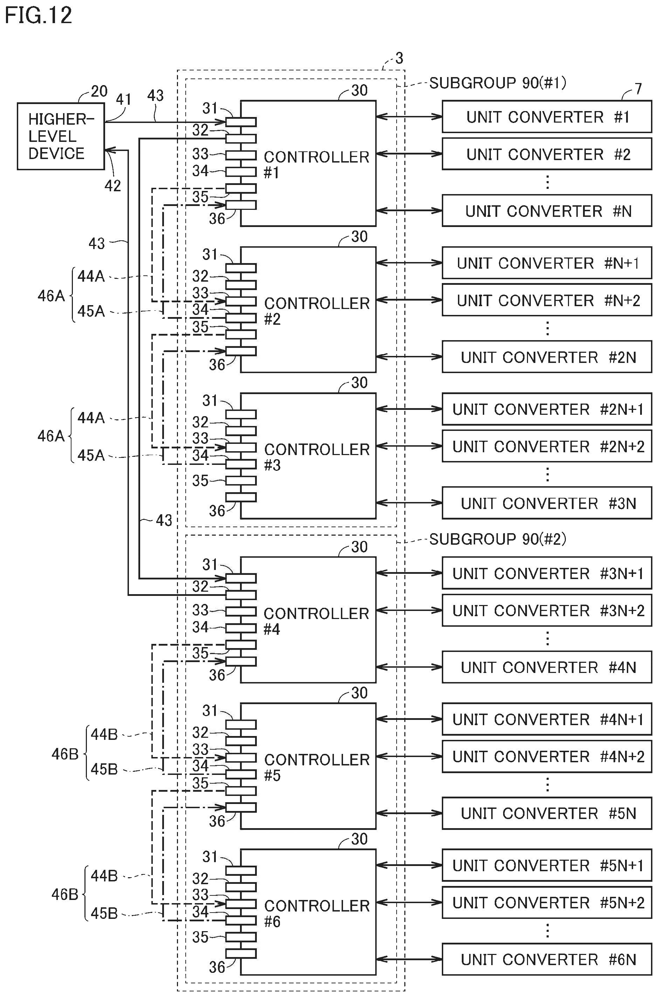

Fig. 12 is a diagram for illustrating the manner of communication connection between the higher-level device and a subgroup and among a plurality of controllers in each subgroup. In Fig. 4, as an example, controller group 3 is divided into two subgroups (#1, #2) 90, first subgroup #1 includes three controllers (#1 to #3) 30, and second subgroup #2 includes three controllers (#4 to #6) 30. However, the number of subgroups 90 and the number of controllers 30 constituting each subgroup 90 are not limited to those in this example.

Since the communication ports of each controller 30 are configured similarly to those described with reference to Fig. 3 of the first embodiment, description will not be repeated. In addition, since a hardware configuration of each controller 30 is the same as that described with reference to Fig. 5 of the first embodiment, description will not be repeated.

Referring to Fig. 12, higher-level device 20, most upstream controller #1 that is representative of subgroup #1, and most upstream controller #4 that is representative of subgroup #2 are connected to one another through network 43 that is a ring-shaped daisy chain (a communication path indicated by a solid line in the figure). Specifically, transmission port 41 of higher-level device 20 is connected to reception port 31 of controller #1. Transmission port 32 of controller #1 is connected to reception port 31 of controller #4. Transmission port 32 of controller #4 is connected to reception port 42 of higher-level device 20. Therefore, communication data is transmitted in order of higher-level device 20, controller #1, controller #4, and higher-level device 20 through this ring-shaped network 43.

Furthermore, three controllers (#1 to #3) 30 constituting subgroup #1 are connected to each other through a network 46A that is a line-shaped daisy chain (a communication path 44A indicated by a dashed line and a communication path 45A indicated by a dash-dot line in the figure). Since line-shaped network 46A in Fig. 12 is the same as second network 46 in Fig. 4, the same or corresponding portions are denoted by the same reference characters and detailed description will not be repeated.

Similarly, three controllers (#4 to #6) 30 constituting subgroup #2 are connected to each other through a network 46B that is a line-shaped daisy chain (a communication path 44B indicated by a dashed line and a communication path 45B indicated by a dash-dot line in the figure). Line-shaped network 46B in Fig. 12 is obtained by replacing controllers #1 to #3 with controllers #4 to #6 in second network 46 in Fig. 4, respectively. Therefore, the same or corresponding portions are denoted by the same reference characters and detailed description will not be repeated.

On the other hand, controller #1 is connected to N corresponding unit converters (#1 to #N) 7 in the star-type manner. Controller #2 is connected to N corresponding unit converters (#N+1 to #2N) 7 in the star-type manner. Controller #3 is connected to N corresponding unit converters (#2N+1 to #3N) 7 in the star-type manner. Controller #4 is connected to N corresponding unit converters (#3N+1 to #4N) 7 in the star-type manner. Controller #5 is connected to N corresponding unit converters (#4N+1 to #5N) 7 in the star-type manner. Controller #6 is connected to N corresponding unit converters (#5N+1 to #6N) 7 in the star-type manner.

For example, #1 of subgroup 90 and #2 of subgroup 90 may constitute a duplex system, and subgroup 90 (#1) may correspond to an A system of the duplex system and subgroup 90 (#2) may correspond to a B system of the duplex system. In this case, controllers #1 to #3 correspond to U phase leg circuit 4u, V phase leg circuit 4v and W phase leg circuit 4w of the A system, respectively. Controllers #4 to #6 correspond to U phase leg circuit 4u, V phase leg circuit 4v and W phase leg circuit 4w of the B system, respectively.

Other manners of connection such as a ring type may be used as the manner of communication connection between each controller 30 and the plurality of unit converters 7 corresponding thereto. In addition, the number of unit converters 7 corresponding to each controller 30 may be different from the number of unit converters 7 corresponding to another controller 30.

In addition, the correspondence among subgroups 90, controllers 30 and arm circuits 5 and 6 (or leg circuits 4) is not limited to that in the above-described case. For example, the number of subgroups 90 shown in Fig. 12 may be six (#1 to #6) and each subgroup 90 may be made up of a plurality of controllers 30 to form a simplex system. In this case, six subgroups 90 (#1 to #6) may correspond to U phase upper arm circuit 5, U phase lower arm circuit 6, V phase upper arm circuit 5, V phase lower arm circuit 6, W phase upper arm circuit 5, and W phase lower arm circuit 6, respectively.

### [Processing Flow of Each Controller and Higher-Level Device]

Next, a processing flow performed by each of a plurality of controllers 30 and higher-level device 20 will be described, given the network configuration described with reference to Fig. 12.

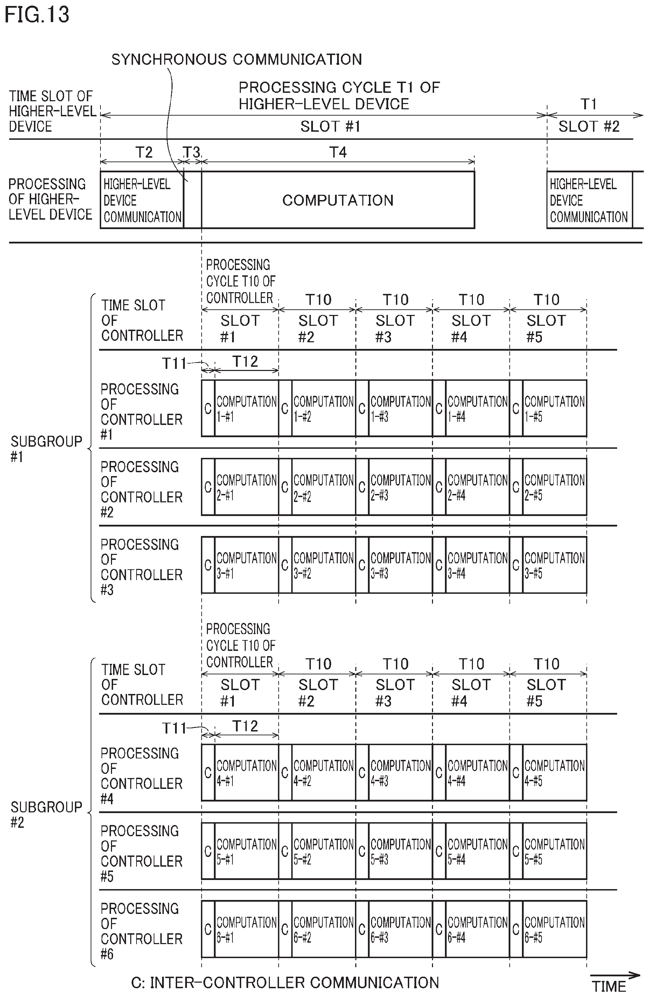

Fig. 13 is a timing chart for illustrating a processing flow of each of the higher-level device and controllers #1 to #6 in Fig. 12. The processing flow in Fig. 13 is basically the same as the processing flow in Fig. 6 described in the first embodiment. Referring to Fig. 13, in higher-level device 20, time period T2 for the higher-level device communication, time period T3 for the time synchronization communication, and time period T4 for computational processing are sequentially set for each processing cycle T1.

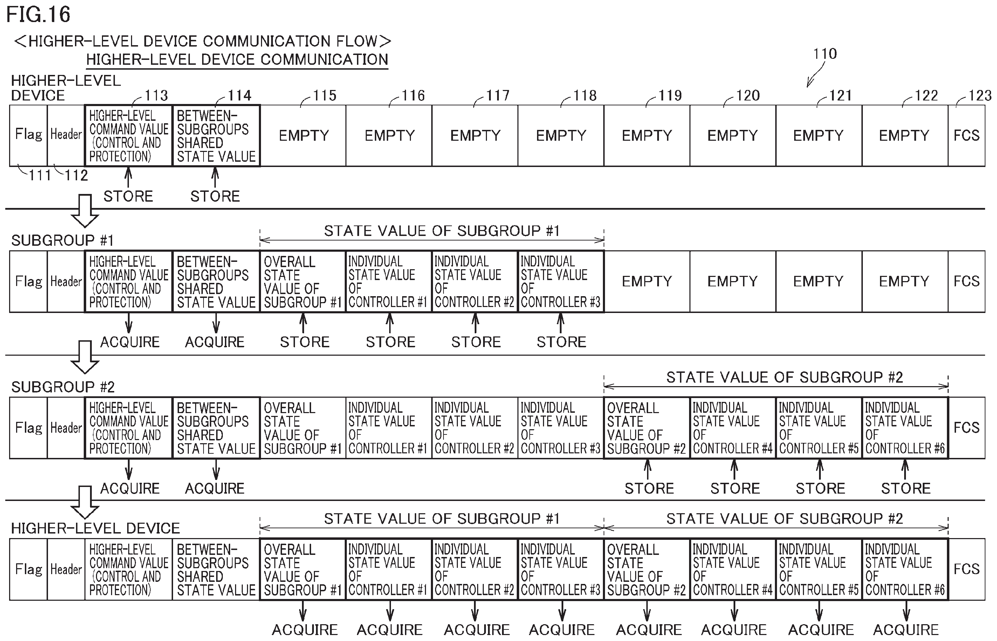

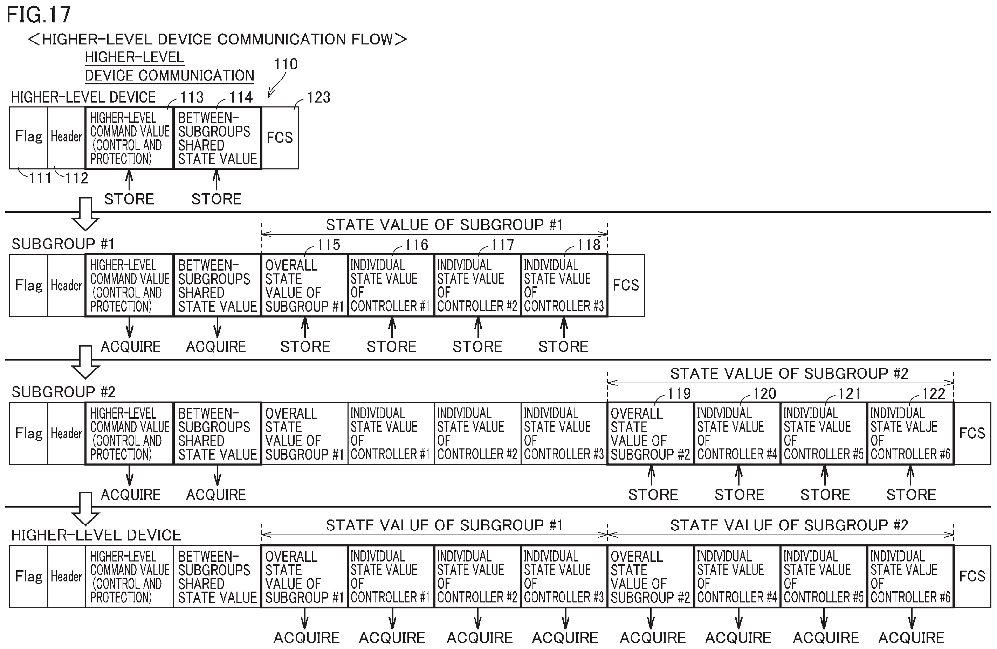

In the higher-level device communication, data is exchanged among higher-level device 20, most upstream controller #1 of subgroup #1, and most upstream controller #4 of subgroup #2 through network 43 that is a ring-shaped daisy chain (the communication path indicated by the solid line in Fig. 12). A specific procedure of the higher-level device communication will be described below with reference to Figs. 16 and 17.

The time synchronization communication is performed to match the control processing timings of a plurality of controllers (#1 to #6) 30. For example, higher-level device 20 transmits a time synchronization signal to controller #1 of subgroup #1 and controller #4 of subgroup #2 through ring-shaped network 43. Next, controller #1 transmits the time synchronization signal to controllers #2 and #3 through line-shaped network 46A (specifically, communication path 44A indicated by the dashed line in the figure) in subgroup #1. Similarly, controller #4 transmits the time synchronization signal to controllers #5 and #6 through line-shaped network 46B (specifically, communication path 44B indicated by the dashed line in the figure) in subgroup #2.

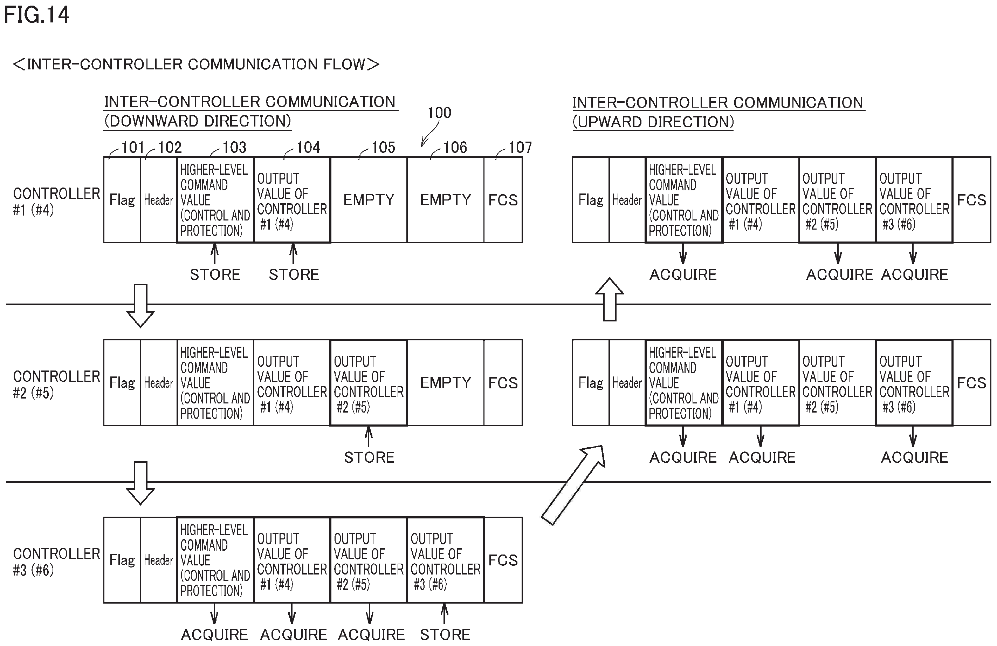

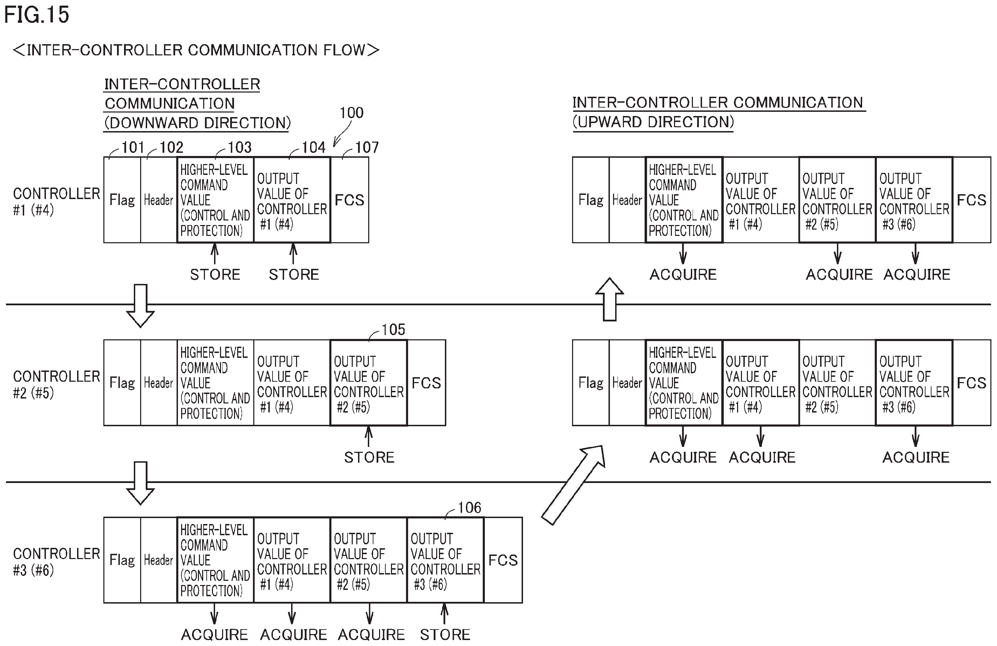

In each of controllers (#1 to #3) 30 constituting subgroup #1, a plurality of time slots (in the case of Fig. 13, five slots) starting from the time synchronization communication are set to correspond to each processing cycle T1 of higher-level device 20. In each controller 30, time period T11 for the inter-controller communication and time period T12 for computational processing are sequentially set for each time slot having processing cycle T10. In the inter-controller communication, controllers (#1 to #3) 30 constituting subgroup #1 communicate with each other through network 46A that is a line-shaped daisy chain. A specific procedure of the inter-controller communication will be described below with reference to Figs. 14 and 15.

Similarly, each of controllers (#4 to #6) 30 constituting subgroup #2 is assigned with a plurality of time slots (in the case of Fig. 13, five slots) starting from the time synchronization communication, to correspond to each processing cycle T1 of higher-level device 20. In each controller 30, time period T11 for the inter-controller communication and time period T12 for computational processing are sequentially set for each time slot having processing cycle T10. In the inter-controller communication, controllers (#4 to #6) 30 constituting subgroup #2 communicate with each other through network 46B that is a line-shaped daisy chain.

### [Inter-Controller Communication Flow]

Next, an inter-controller communication flow set for each time slot of each controller 30 will be described. Fig. 14 is a diagram for illustrating an inter-controller communication flow performed using a communication frame having a fixed length in a power conversion device according to the second embodiment.

An inter-control communication flow among controllers #1 to #3 constituting subgroup #1 will be described below. In the description below, an inter-control communication flow among controllers #4 to #6 constituting subgroup #2 is obtained by replacing controllers #1 to #3 with controllers #4 to #6, respectively, and thus, description will not be repeated.

In the example of Fig. 14, a communication frame 100 has a fixed length and includes a flag field 101, a header field 102, data fields 103 to 106, and an FCS field 107. Since flag field 101, header field 102 and FCS field 107 are the same as flag field 71, header field 72 and FCS field 76 described with reference to Fig. 8, description will not be repeated.

Data field 103 stores a higher-level command value acquired through higher-level control communication with higher-level device 20. Since only most upstream controller #1 is communicatively connected to higher-level device 20 through ring-shaped network 43, it is necessary to transmit the higher-level command value acquired from higher-level device 20 to downstream controllers #2 and #3. The higher-level command value may only be stored in data field 103 in any one of time slots #1 to #5 (e.g., time slot #1 immediately after the higher-level device communication).

Data fields 104 to 106 store output values of controllers #1 to #3, respectively. The output values of controllers #1 to #3 are the same as those described with reference to Fig. 8 of the first embodiment.

As shown in Fig. 14, above-described communication frame 100 is generated in controller #1. Controller #1 stores the higher-level command value in data field 103 and stores its own output value in data field 104. Although controller #1 maintains data fields 105 and 106, controller #1 does not store any data in these data fields. Controller #1 transmits generated communication frame 70 to controller #2.

Controller #2 stores its own output value in data field 105 of communication frame 100 received from controller #1, thereby updating communication frame 100, and transmits updated communication frame 100 to controller #3.

Controller #3 stores its own output value in data field 106 of communication frame 100 received from controller #2. Furthermore, controller #3 acquires the higher-level command value stored in data field 103 of communication frame 100 and the output values of controllers #1 and #2 other than controller #3 itself stored in data fields 104 and 105 of communication frame 100. In this way, the inter-controller communication in the downstream direction is completed.

Next, controller #3 transmits updated communication frame 100 to controller #2.

Controller #2 acquires the higher-level command value stored in data field 103 of communication frame 100 received from controller #3 and the output values of controllers #1 and #3 other than controller #2 itself stored in data fields 104 and 106 of communication frame 100 received from controller #3. Thereafter, controller #2 transmits communication frame 100 to controller #1.

Controller #1 acquires the higher-level command value stored in data field 103 of communication frame 100 received from controller #2 and the output values of controllers #2 and #3 other than controller #1 itself stored in data fields 105 and 106 of communication frame 100 received from controller #2. In this way, the inter-control communication in the upstream direction is completed.

Fig. 15 is a diagram for illustrating an inter-controller communication flow performed using a communication frame having a variable length in the power conversion device according to the second embodiment. In the example of Fig. 15, a required data field is added when each controller 30 stores its own output value in communication frame 100.

An inter-controller communication flow among controllers #1 to #3 constituting subgroup #1 will be described below. In the description below, an inter-controller communication flow among controllers #4 to #6 constituting subgroup #2 is obtained by replacing controllers #1 to #3 with controllers #4 to #6, respectively, and thus, description will not be repeated.

Specifically, controller #1 generates communication frame 100 including frag field 101, header field 102, data fields 103 and 104, and FCS field 107. Data field 103 stores a higher-level command value. Data field 104 stores an output value of controller #1. Controller #1 transmits generated communication frame 100 to controller #2.

Controller #2 adds data field 105 between data field 104 and FCS field 107 of communication frame 100 received from controller #1. Controller #2 stores its own output value in added data field 105. Controller #2 transmits updated communication frame 100 to controller #3.

Controller #3 adds data field 106 between data field 105 and FCS field 107 of communication frame 100 received from controller #2. Controller #3 stores its own output value in added data field 106. Furthermore, controller #3 acquires the higher-level command value stored in data field 103 and the output values of controllers #1 and #2 other than controller #3 itself stored in data fields 104 and 105.

In this way, the communication in the downward direction is completed and the communication proceeds to the communication in the upward direction. In the communication in the upward direction, controller #3 transmits updated communication frame 100 to controller #2. Since the subsequent operation of controllers #2 and #1 in the communication in the upward direction is the same as that in the case of Fig. 14, description will not be repeated.

### [Higher-Level Device Communication Flow]

Next, a higher-level control communication flow set for each time slot of higher-level device 20 will be described. Fig. 16 is a diagram for illustrating a higher-level device communication flow performed using a communication frame having a fixed length in the power conversion device according to the second embodiment.

As described with reference to Fig. 12, in the higher-level device communication, first network 43 of loop-shaped daisy chain type (the communication path indicated by the solid line in Fig. 12) is used. Specifically, as shown in Fig. 12, a communication frame 110 is generated and sent by higher-level device 20 and is transmitted in order of most upstream controller #1 of subgroup #1, most upstream controller #4 of subgroup #2, and higher-level device 20.

In the case of Fig. 16, communication frame 110 has a fixed length and includes a flag field 111, a header field 112, data fields 113 to 122, and an FCS field 123. Since flag field 111, header field 112 and FCS field 123 are the same as flag field 81, header field 82 and FCS field 87 described with reference to Fig. 10, description will not be repeated.

Data field 113 stores a higher-level command value output from higher-level device 20. The higher-level command value includes a control command and a protection command.

Data field 114 stores a state value to be shared between the subgroups (also referred to as a between-subgroups shared state value). Data field 115 stores an overall state value of subgroup #1. Data fields 116 to 118 store individual state values of controllers #1 to #3 constituting subgroup #1, respectively. Data field 119 stores an overall state value of subgroup #2. Data fields 120 to 122 store individual state values of controllers #4 to #6 constituting subgroup #2, respectively.

Each of the above-described individual state values includes, for example, information indicating an operating state (i.e., whether or not the controller is in operation), information indicating a degree and a type of failure, and the like. The individual state value of each controller 30 includes state values of N unit converters 7 connected to this controller 30.

Each of the above-described overall state values includes an aggregated value for each subgroup 90. For example, a summed value of capacitor voltage values Vc for each subgroup 90, the operating state information for each subgroup 90, and the like are stored in data field 115 as the overall state value and transmitted to higher-level device 20. Higher-level device 20 stores the acquired summed value of capacitor voltage values Vc for each subgroup 90 in data field 114 as the between-subgroups shared state value, thereby enabling the information about capacitor voltage values Vc to be shared between the subgroups.

As shown in Fig. 16, above-described communication frame 110 is generated in higher-level device 20. Higher-level device 20 stores the higher-level command value in data field 113 and stores the between-subgroups shared state value in data field 114. Although the higher-level device maintains data fields 115 to 122, the higher-level device does not store any data in these data fields. Higher-level device 20 transmits generated communication frame 110 to most upstream controller #1 of subgroup #1.

Controller #1 acquires the higher-level command value stored in data field 113 of communication frame 110 received from higher-level device 20 and the between-subgroups shared state value stored in data field 114 of communication frame 110 received from higher-level device 20. Furthermore, controller #1 stores the overall state value of subgroup #1 in data field 115 and stores the individual state values of controllers #1 to #3 in data fields 116 to 118, respectively. Controller #1 transmits updated communication frame 110 to most upstream controller #4 of subgroup #2.

Controller #4 acquires the higher-level command value stored in data field 113 of communication frame 110 received from controller #1 and the between-subgroups shared state value stored in data field 114 of communication frame 110 received from controller #1. Furthermore, controller #4 stores the overall state value of subgroup #2 in data field 119 and stores the individual state values of controllers #4 to #6 in data fields 120 to 122, respectively. Controller #4 transmits updated communication frame 110 to higher-level device 20.

Higher-level device 20 acquires the state values about subgroup #1 stored in data fields 115 to 118 of communication frame 110 received from controller #4 and acquires the state values about subgroup #2 stored in data fields 119 to 122 of communication frame 110 received from controller #4. The acquired state values about respective subgroups 90 are used as inputs for computational processing of the higher-level device itself. In this way, the higher-level device communication flow using the communication frame having the fixed length ends.

Fig. 17 is a diagram for illustrating a higher-level device communication flow performed using a communication frame having a variable length in the power conversion device according to the second embodiment. In the example of Fig. 17, a required data field is added when most upstream controller 30 of each subgroup 90 stores, in communication frame 110, the state value of subgroup 90 to which this controller 30 belongs.

Specifically, higher-level device 20 generates communication frame 110 including flag field 111, header field 112, data fields 113 and 114, and FCS field 123. Data field 113 stores the higher-level command value and data field 114 stores the between-subgroups shared state value. Higher-level device 20 transmits generated communication frame 110 to most upstream controller #1 of subgroup #1.

Controller #1 acquires the higher-level command value stored in data field 113 of communication frame 110 received from higher-level device 20 and the between-subgroups shared state value stored in data field 114 of communication frame 110 received from higher-level device 20. Furthermore, controller #1 adds data fields 115 to 118 between data field 114 and FCS field 123 of communication frame 110. Controller #1 stores the overall state value of subgroup #1 in added data field 115 and stores the individual state values of controllers #1 to #3 in added data fields 116 to 118, respectively. Controller #1 transmits updated communication frame 110 to most upstream controller #4 of subgroup #2.

Controller #4 acquires the higher-level command value stored in data field 113 of communication frame 110 received from controller #1 and the between-subgroups shared state value stored in data field 114 of communication frame 110 received from controller #1. Furthermore, controller #4 adds data fields 119 to 122 between data field 118 and FCS field 123 of communication frame 110. Controller #4 stores the overall state value of subgroup #2 in added data field 119 and stores the individual state values of controllers #4 to #6 in added data fields 120 to 122, respectively. Controller #4 transmits updated communication frame 110 to higher-level device 20.

Higher-level device 20 acquires the state values about subgroup #1 stored in data fields 115 to 118 of communication frame 110 received from controller #4 and acquires the state values about subgroup #2 stored in data fields 119 to 122 of communication frame 110 received from controller #4. The acquired state values about respective subgroups 90 are used as inputs for computational processing of the higher-level device itself. In this way, the higher-level device communication flow using the communication frame having the variable length ends.

### [Specific Example of Computational Processing of Each Controller]

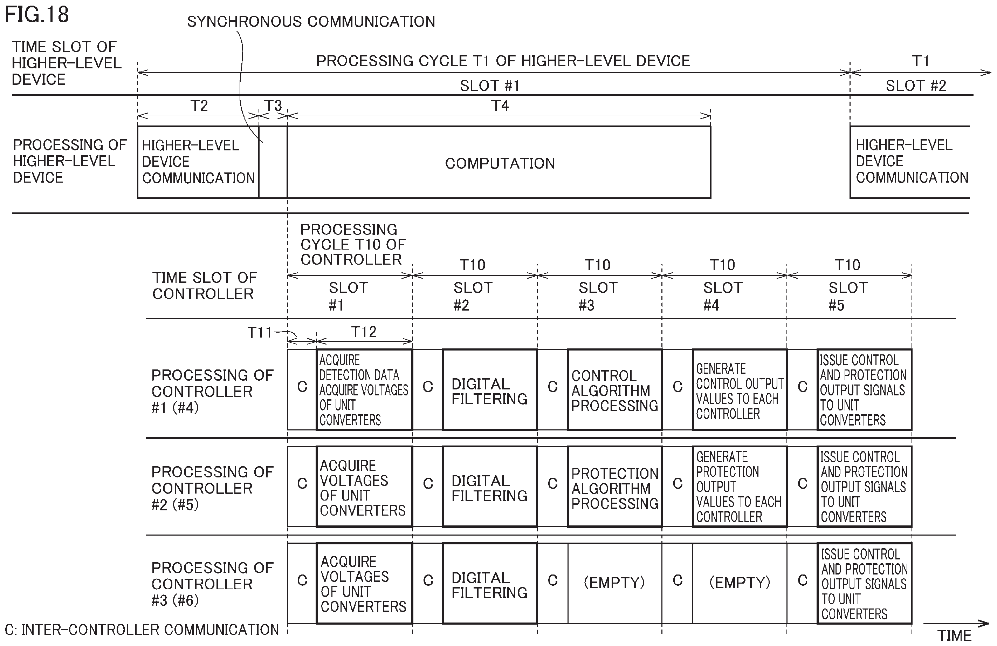

Fig. 18 shows an example of processing assigned to a slot of each computing device in the power conversion device according to the second embodiment. Referring to Fig. 18, processing assigned to each slot of controllers #1 to #3 constituting subgroup #1 and processing assigned to each slot of controllers #4 to #6 constituting subgroup #2 are basically the same as those in the example described with reference to Fig. 7 of the first embodiment.

In order to perform control algorithm processing and protection algorithm processing in slot #3, the state values corresponding to another subgroup 90, such as the summed value of capacitor voltage values Vc of unit converters 7 and the operating state, can be used as inputs for processing. As described with reference to Fig. 16, the state values of each subgroup 90, such as the summed value of capacitor voltage values Vc and the operating state, are transmitted from each subgroup to higher-level device 20 as the overall state value and are distributed from higher-level device 20 to each subgroup 90 as the between-subgroups shared state value. The control algorithm processing and the protection algorithm processing in slot #3 are performed for each subgroup 90 by controller 30 to which the processing is assigned, and the result of processing is distributed by the inter-controller communication for each subgroup 90.

### [Summary of Second Embodiment]

The features of the above-described second embodiment will be summarized below. As described with reference to Fig. 12, in power conversion device 1 according to the second embodiment, a plurality of controllers 30 constituting controller group 3 are divided into a plurality of subgroups 90. First controller 30 (#1; #4) of a plurality of controllers 30 constituting each subgroup 90 is connected to higher-level device 20 through first network 43. Furthermore, the plurality of controllers 30 constituting each subgroup 90 are connected to each other through second network 46A, 46B provided individually for each subgroup 90.

As described with reference to Fig. 14, the inter-controller communication through second network 46A; 46B provided for each subgroup 90 includes the following procedure.
(i) First controller 30 (#1; #4) in each of the plurality of subgroups 90 is connected to a first end of second network 46A; 46B. First controller 30 (#1; #4) generates first communication frame 100 that stores data to be shared with the other controllers 30 (#2, #3; #5, #6). First controller 30 (#1; #4) transmits generated first communication frame 100 toward second controller 30 (#3; #6) connected to a second end of second network 46A; 46B.
(ii) Upon receiving first communication frame 100 transmitted from first controller 30 (#1; #4), each controller 30 (#2; #4) connected to second network 46A; 46B between first controller 30 (#1; #4) and second controller 30 (#3; #6) in each of the plurality of subgroups 90 stores data to be shared with the other controllers 30 (#1, #3; #4, #6) in first communication frame 100, and then, transmits first communication frame 100 toward second controller 30 (#3; #6).
(iii) Upon receiving first communication frame 100 transmitted from first controller 30 (#1; #4), second controller 30 (#3; #6) in each of the plurality of subgroups 90 stores data to be shared with the other controllers 30 (#1, #2; #4, #5) in first communication frame 100. Furthermore, second controller 30 (#3; #6) acquires the data stored in first communication frame 100 by the other controllers 30 (#1, #2; #4, #5), and then, transmits first communication frame 100 toward first controller 30 (#1; #4).
(iv) Upon receiving first communication frame 100 transmitted from second controller 30 (#3; #6), each controller 30 (#2; #4) connected to second network 46A; 46B between first controller 30 (#1; #4) and second controller 30 (#3; #6) in each of the plurality of subgroups 90 acquires the data stored in first communication frame 100 by the other controllers 30 (#1, #3; #4, #6), and then, transmits first communication frame 100 toward first controller 30 (#1; #4).
(v) Upon receiving first communication frame 100 transmitted from second controller 30 (#3; #6), first controller 30 (#1; #4) in each of the plurality of subgroups 90 acquires the data stored in first communication frame 100 by the other controllers 30 (#2, #3; #5, #6).

Furthermore, as described with reference to Fig. 16, the higher-level device communication through first network 43 includes the following procedure.
(i) Higher-level device 20 generates second communication frame 110 that stores data to be transmitted to each subgroup 90 of controller group 3, and outputs generated second communication frame 110 to first network 43.
(ii) Upon receiving second communication frame 110 through first network 43, first controller 30 (#1; #4) of each subgroup 90 of controller group 3 acquires the data stored in second communication frame 110 by higher-level device 20 and stores data to be transmitted to higher-level device 20 in second communication frame 110. Furthermore, in any one of the plurality of time slots corresponding to the first processing cycle, first controller 30 (#1; #4) stores the data received from higher-level device 20 in first communication frame 100, thereby transmitting the data received from higher-level device 20 to the other controllers 30 (#2, #3; #5, #6) of the same subgroup 90.
(iii) Upon receiving second communication frame 110 through first network 43, higher-level device 20 acquires the data stored in second communication frame 110 by first controller 30 (#1; #4) of each subgroup 90 of controller group 3.

As described above, the plurality of controllers 30 constituting controller group 3 can exchange the data required for processing among the controllers through the above-described inter-controller communication and the above-described higher-level device communication. Thus, the plurality of controllers 30 constituting controller group 3 can control power converter 2 in a short cycle in coordination with each other.

### [Summary of the Whole]

The features common to the first and second embodiments will be summarized below. As described with reference to Figs. 1 and 2, power conversion device 1 includes: power converter 2 including a plurality of leg circuits 4 connected in parallel with each other; and controller group 3 that controls power converter 2. Each of the plurality of leg circuits 4 includes a plurality of cascaded unit converters 7. Each of the plurality of unit converters 7 includes power storage element 24 and a plurality of switching elements 22, and outputs a voltage of power storage element 24 in accordance with open/closed states of the plurality of switching elements 22.

As described with reference to Figs. 4 and 12, each of the plurality of unit converters 7 corresponds to any one of a plurality of controllers 30 constituting controller group 3 and is connected to corresponding controller 30. At least two controllers 30 of the controller group 3 are connected to higher-level device 20 through first network 43, first network 43 being a ring-shaped daisy chain. Each controller 30 of controller group 3 is connected to at least one of controllers 30 in controller group 3 through at least one second network 46, second network 46 being a line-shaped daisy chain.

Furthermore, as described with reference to Figs. 6 and 13, a time period for performing higher-level device communication and a time period for performing computational processing are set for higher-level device 20 for each first processing cycle T1. The higher-level device communication is communication between higher-level device 20 and at least two controllers 30 of controller group 3 through first network 43. A plurality of time slots each having second processing cycle T10 shorter than the first processing cycle are further set for each controller 30 of controller group 3 for each first processing cycle T1. Each of the plurality of time slots includes a time period for performing inter-controller communication and a time period for performing computational processing. The inter-controller communication is communication between controllers 30 of controller group 3 through at least one second network 46.

Further preferably, between the time period for performing the higher-level device communication and the time period for performing the computational processing, a communication period for time synchronization is further set for higher-level device 20 for each first processing cycle T1. The plurality of time slots of each controller 30 are set starting from the communication period for time synchronization.

It should be understood that the embodiments disclosed herein are illustrative and non-restrictive in every respect. The scope of the present application is defined by the terms of the claims, rather than the description above, and is intended to include any modifications within the scope and meaning equivalent to the terms of the claims.

### REFERENCE SIGNS LIST

1 power conversion device; 2 power converter; 3 controller group; 4 leg circuit; 5 upper arm circuit; 6 lower arm circuit; 7 unit converter; 8 reactor; 9 arm current detector; 10 AC voltage detector; 11 DC voltage detector; 12 AC system; 13 transformer; 14 DC system; 16 AC current detector; 17 DC current detector; 20 higher-level device; 21 conversion circuit; 22 switching element; 23 diode; 24 power storage element; 25 voltage detector; 26N, 26P input/output terminal; 27 individual control unit; 30 controller; 31, 33, 36, 37, 42 reception port; 32, 34, 35, 38, 41 transmission port; 39 optical fiber cable; 43 first network; 46, 46A, 46B second network; 50 input converter; 51 sample hold circuit; 52 multiplexer; 53 A/D converter; 54 CPU; 55 RAM; 56 ROM; 57 auxiliary storage device; 58 input/output interface; 59 bus; 60 relay device; 70, 80, 100, 110 communication frame; 71, 81, 101, 111 flag field; 72, 82, 102, 112 header field; 73 to 75, 83 to 86, 103 to 106, 113 to 122 data field; 76, 87, 107, 123 FCS field; 90 subgroup; BPS bypass switch; Iac AC current; Iarm arm current; Idc DC current; Nn low-potential-side DC terminal; Np high-potential-side DC terminal; Nu, Nv, Nw AC input terminal; T1 first processing cycle; T10 second processing cycle; Vac AC voltage; Vc capacitor voltage value; Vdc DC voltage.

## Claims

1. A power conversion device comprising a power converter including a plurality of leg circuits connected in parallel with each other, wherein
each of the plurality of leg circuits includes a plurality of cascaded unit converters,
each of the plurality of unit converters includes a power storage element and a plurality of switching elements, and outputs a voltage of the power storage element in accordance with open/closed states of the plurality of switching elements,
the power conversion device further comprising a controller group that controls the power converter, wherein
each of the plurality of unit converters corresponds to any one of a plurality of controllers constituting the controller group and is connected to a corresponding controller,
at least two controllers of the controller group are connected to a higher-level device through a first network, the first network being a ring-shaped daisy chain, and
each controller of the controller group is connected to at least one of the controllers in the controller group through at least one second network, the second network being a line-shaped daisy chain.

2. The power conversion device according to claim 1, wherein
a time period for performing higher-level device communication and a time period for performing computational processing are set for the higher-level device for each first processing cycle, the higher-level device communication being communication between the higher-level device and the at least two controllers of the controller group through the first network, and
a plurality of time slots each having a second processing cycle shorter than the first processing cycle are set for each controller of the controller group for each first processing cycle, each of the plurality of time slots including a time period for performing inter-controller communication and a time period for performing computational processing, the inter-controller communication being communication between the controllers of the controller group through the at least one second network.

3. The power conversion device according to claim 2, wherein
between the time period for performing the higher-level device communication and the time period for performing the computational processing, a communication period for time synchronization is further set for the higher-level device for each first processing cycle, and
the plurality of time slots are set starting from the communication period for time synchronization.

4. The power conversion device according to claim 2 or 3, wherein
the controllers constituting the controller group are all connected to the higher-level device through the first network, and are connected to each other through the single second network.

5. The power conversion device according to claim 4, wherein
the inter-controller communication includes:
a first controller generating a first communication frame that stores data to be shared with other controllers, and transmitting the generated first communication frame toward a second controller, the first controller being connected to a first end of the second network, the second controller being connected to a second end of the second network;
upon receiving the first communication frame transmitted from the first controller, each controller that is connected to the second network between the first controller and the second controller storing data to be shared with other controllers in the first communication frame, and then, transmitting the first communication frame toward the second controller;
upon receiving the first communication frame transmitted from the first controller, the second controller storing data to be shared with other controllers in the first communication frame, acquiring the data stored in the first communication frame by the other controllers, and then, transmitting the first communication frame toward the first controller;
upon receiving the first communication frame transmitted from the second controller, each controller that is connected to the second network between the first controller and the second controller acquiring the data stored in the first communication frame by the other controllers, and then, transmitting the first communication frame toward the first controller; and
upon receiving the first communication frame transmitted from the second controller, the first controller acquiring the data stored in the first communication frame by the other controllers.

6. The power conversion device according to claim 5, wherein
the first communication frame has a variable length, and
upon receiving the first communication frame, each controller of the controller group other than the first controller adds a field to the first communication frame and stores the data to be shared with the other controllers in the field added to the first communication frame.

7. The power conversion device according to claim 5 or 6, wherein
the higher-level device communication includes:
the higher-level device generating a second communication frame that stores data to be transmitted to each controller of the controller group, and outputting the generated second communication frame to the first network;
upon receiving the second communication frame through the first network, each controller of the controller group acquiring the data stored in the second communication frame by the higher-level device, and storing data to be transmitted to the higher-level device in the second communication frame; and
upon receiving the second communication frame through the first network, the higher-level device acquiring the data stored in the second communication frame by each controller of the controller group.

8. The power conversion device according to claim 7, wherein
the second communication frame has a variable length, and
upon receiving the second communication frame, each controller of the controller group adds a field to the second communication frame and stores the data to be transmitted to the higher-level device in the field added to the second communication frame.

9. The power conversion device according to claim 2 or 3, wherein
the plurality of controllers constituting the controller group are divided into a plurality of subgroups,
a first controller of a plurality of controllers constituting each of the plurality of subgroups is connected to the higher-level device through the first network, and
the plurality of controllers constituting each of the plurality of subgroups are connected to each other through the second network provided individually for each subgroup.

10. The power conversion device according to claim 9, wherein
the first controller in each of the plurality of subgroups is connected to a first end of the second network, and
the inter-controller communication includes:
the first controller in each of the plurality of subgroups generating a first communication frame that stores data to be shared with other controllers, and transmitting the generated first communication frame toward a second controller, the second controller being connected to a second end of the second network;
upon receiving the first communication frame transmitted from the first controller, each controller that is connected to the second network between the first controller and the second controller in each of the plurality of subgroups storing data to be shared with other controllers in the first communication frame, and then, transmitting the first communication frame toward the second controller;
upon receiving the first communication frame transmitted from the first controller, the second controller in each of the plurality of subgroups storing data to be shared with other controllers in the first communication frame, acquiring the data stored in the first communication frame by the other controllers, and then, transmitting the first communication frame toward the first controller;
upon receiving the first communication frame transmitted from the second controller, each controller that is connected to the second network between the first controller and the second controller in each of the plurality of subgroups acquiring the data stored in the first communication frame by the other controllers, and then, transmitting the first communication frame toward the first controller; and
upon receiving the first communication frame transmitted from the second controller, the first controller in each of the plurality of subgroups acquiring the data stored in the first communication frame by the other controllers.

11. The power conversion device according to claim 10, wherein
the first communication frame has a variable length, and
upon receiving the first communication frame, each controller of each subgroup other than the first controller adds a field to the first communication frame and stores the data to be shared with the other controllers in the field added to the first communication frame.

12. The power conversion device according to claim 10 or 11, wherein
the higher-level device communication includes:
the higher-level device generating a second communication frame that stores data to be transmitted to each subgroup of the controller group, and outputting the generated second communication frame to the first network;
upon receiving the second communication frame through the first network, the first controller of each subgroup of the controller group acquiring the data stored in the second communication frame by the higher-level device and storing data to be transmitted to the higher-level device in the second communication frame, and further, in any one of the plurality of time slots corresponding to the first processing cycle, storing data received from the higher-level device in the first communication frame, thereby transmitting the data received from the higher-level device to other controllers; and
upon receiving the second communication frame through the first network, the higher-level device acquiring the data stored in the second communication frame by the first controller of each subgroup of the controller group.

13. The power conversion device according to claim 12, wherein
the second communication frame has a variable length, and
upon receiving the second communication frame, the first controller of each subgroup of the controller group adds a field to the second communication frame and stores the data to be transmitted to the higher-level device in the field added to the second communication frame.

14. The power conversion device according to any one of claims 1 to 13, wherein
each controller constituting the controller group has a common communication port configuration, and
each controller includes:
a first transmission port and a first reception port for connection with the first network;
a second transmission port and a second reception port for connection with a controller adjacent in a direction of a first end of the second network; and
a third transmission port and a third reception port for connection with a controller adjacent in a direction of a second end of the second network.
